# EUROPÄISCHE PATENTSCHRIFT

(11) **EP 0 552 673 B1**
(45) Veröffentlichungstag und Bekanntmachung des Hinweises auf die Patenterteilung: **06.09.1995**
(21) Anmeldenummer: 93100515.1
(22) Anmeldetag: 15.01.1993
(51) Int. Cl.: B60K 17/08, F16H 37/04, F16H 57/02

(54) **Kraftfahrzeuggetriebe**
Motor vehicle gear
Boîte de vitesse pour véhicule à moteur

(30) Priorität: 22.01.1992 US 823916
(43) Veröffentlichungstag der Anmeldung: 28.07.1993
(73) Patentinhaber: DEERE & COMPANY, Moline, Illinois 61265 (US)
(72) Erfinder: Shirley, Ralph Edwin, Waterloo, Iowa 50701 (US); Hückler, Volker, W-7760 Radolfzell 16 (DE); Eckhardt, Uli, W-6720 Speyer (DE)
(74) Vertreter: Feldmann, Bernhard

(56) Entgegenhaltungen:
- AT-B- 219 918
- DE-A- 2 839 796
- DE-A- 3 137 805
- DE-A- 3 538 002
- DE-B- 2 514 781
- DE-B- 2 649 949
- PATENT ABSTRACTS OF JAPAN, unexamined applications, M Sektion, Band 10, Nr.189, 3. Juli 1986 THE PATENT OFFICE JAPANESE GOVERNMENT Seite 2 M 494

## Beschreibung

Die Erfindung betrifft ein Getriebe für Kraftfahrzeuge, insbesondere für landwirtschaftliche oder Nutzfahrzeuge, das mehrere Getriebeeinheiten enthält, die wahlweise modular zusammensetzbar sind und ein vielgängiges Getriebe bilden.

Bei Arbeitsfahrzeugen, wie Land- und Nutzfahrzeugen, werden in der Regel Getriebe mit einer Vielzahl von Gängen verwendet. Die tatsächliche und die erforderliche Anzahl der Übertragungsverhältnisse variiert von Anwendungsfall zu Anwendungsfall.

Die Herstellungsstückzahlen der Getriebe für einen besonderen Anwendungsfall können relativ klein sein. Die Konstruktion und Fertigung kleiner Serien ist jedoch teuer. Es wird daher angestrebt, ein Getriebe in Modulbauweise auszuführen, so daß sich verschiedene Getriebekomponenten auf verschiedene Weise zusammensetzen lassen, um den besonderen Anforderungen Rechnung zu tragen.

In der gattungsbildenden DE-A-31 37 805 wird ein modularer Getriebeaufbau gefordert, um einfachere und technisch anspruchsvollere Getriebekombinationen aus einer verhältnismäßig geringen Anzahl baugleicher Einzelkomponenten zu erstellen. Auf die mit dieser Zielsetzung verbundenen konstruktiven Schwierigkeiten wird jedoch nicht eingegangen.

Die der Erfindung zugrunde liegende Aufgabe wird darin gesehen, ein modular zusammensetzbares Kraftfahrzeuggetriebe anzugeben, das den einfachen Aufbau einer Vielzahl unterschiedlicher Getriebestrukturen aus mehreren Getriebeeinheiten zuläßt.

Die Aufgabe wird ausgehend von dem Oberbegriff des Patentanspruches 1 durch dessen kennzeichnende Merkmale gelöst. Weitere vorteilhafte Ausgestaltungen und Weiterbildungen der Erfindung gehen aus den Unteransprüchen hervor.

Als Getriebeeinheiten kommen beispielsweise ein Gangschaltgetriebemodul, ein oder mehrere Gruppenschaltgetriebemodule, ein Kriechganggetriebemodul, ein Vorderradantriebsgetriebemodul und ein Lastschaltgetriebemodul in Betracht. Diese lassen sich wahlweise in unterschiedlichen Kombinationen zusammenbauen, um für unterschiedliche Anwendungen unterschiedliche Übertragungsbedingungen zu erhalten. Das aus den Getriebeeinheiten zusammengesetzte Gesamtgetriebe kann beispielsweise zwischen der Antriebsmaschine und dem Achsdifferential des Fahrzeugs eingefügt werden.

Einzelne Getriebeeinheiten sind im wesentlichen hutförmig ausgebildet. Sie weisen auf einer Gehäuseseite einen Bodenflansch auf, an den sich eine mehr oder weniger geschlossene Seitenwandung anschließt, durch die die Getriebeverzahnungen geschützt werden und die das Getriebeöl auffängt. Auf der dem Bodenflansch gegenüberliegenden Getriebemodulseite befindet sich eine Gehäuseöffnung, welche durch den Bodenflansch eines benachbarten Getriebegehäuses nach außen verschließbar ist. Wenigstens eine Getriebeeinheit enthält eine oder mehrere Getriebewellen, die einenends in dem Bodenflansch des zugehörigen Getriebegehäuses gelagert sind und sich anderenends frei in die Gehäuseöffnung des Getriebegehäuses erstrecken. Die Anordnung und Lagerung der Getriebewellen wird so vorgenommen, daß sich eine aus dem Getriebegehäuse, den zugehörigen Getriebewellen sowie gegebenenfalls weiteren Komponenten bestehende vormontierbare Getriebeeinheit ergibt. Die sich frei in die Gehäuseöffnung des Getriebegehäuses erstreckenden Enden der Getriebewellen stützen sich nach dem Zusammenbau mit einer benachbarten Getriebeeinheit am Bodenflansch oder einer geeigneten Aufnahme der benachbarten Getriebeeinheit ab. Der Bodenbereich des benachbarten Getriebegehäuses dient dabei gleichzeitig als Deckelflansch für das Getriebegehäuse.

Die modulare Ausbildung des Getriebes, bei dem jede Welle bzw. jeder Wellenabschnitt lediglich einem hutförmig (oder topfförmig) ausgebildeten Getriebegehäuse zugeordnet ist, gestattet die komplette Vormontage der Wellen mit den zugehörigen Zahnrädern, Kupplungen, Lagern, Dichtungen und dergleichen außerhalb des Getriebegehäuses. Es können somit beispielsweise die notwendigen Axialspiele der Schalträder (z. B. Synchronräder) leicht eingestellt und geprüft werden. Erst nach der Vormontage der Wellen werden diese mit einem Ende in das nach einer Seite hin offene Getriebegehäuse eingesetzt. Das Getriebegehäuse wird dann mit der Schaltung für Schalteinheiten (z. B. Synchronisiereinheiten) komplettiert und steht schließlich zum Zusammenbau mit einer weiteren vormontierten Getriebeeinheit zur Verfügung. Bei dem Zusammenbau werden die in Richtung der oder durch die Gehäuseöffnung ragenden Wellenenden in Lagerstellen eingesteckt, die von der Außenseite des Bodenflanschs des benachbarten Getriebegehäuses in diesen eingelassen sind.

Das sich frei in die Getriebegehäuseöffnung erstreckende Wellenende kann unmittelbar über eine Lagerstelle im Bodenflansch der benachbarten Getriebeeinheit abgestützt werden. Es ist in vielen Fällen jedoch vorteilhaft, daß zwei benachbarte Getriebeeinheiten so angeordnet werden, daß wenigstens zwei ihrer Wellen miteinander fluchten. Der die beiden Getriebeeinheiten trennende Bodenflansch weist eine Öffnung auf, durch die sich eine der Wellen erstreckt und in der diese Welle gelagert ist. Das freie Ende dieser Welle trägt eine konzentrische Lagerstelle, die der Aufnahme des Wellenendes der anderen Welle dient. Die Lagerstelle kann entweder eine Keilverzahnung enthalten, durch die eine formschlüssige Verbindung zwischen den Wellen herstellbar ist, oder sie kann als Drehlagerung, beispielsweise als Nadellagerung ausgebildet sein, die eine Verdrehung der Wellen gegeneinander zuläßt. Bei einer Drehlagerung ist vorzugsweise eine Kupplung vorgesehen, durch die wahlweise die beiden Wellen drehfest miteinander verbindbar sind, wodurch sich in vielen Fällen ein zusätzlicher Gang realisieren läßt.

Vorzugsweise ist eine der hutförmigen Getriebeeinheiten ein Gangschaltgetriebemodul, in dessen Bodenflansch eine Eingangswelle mit wenigstens zwei durch Schalteinheiten einrückbare Losräder sowie eine Festräderwelle mit wenigstens zwei mit den Losrädern kämmende Festräder gelagert sind. Die Festräderwelle trägt im Bereich ihres zweiten, freien Endes ein weiteres Festrad, das mit einem Eingangszahnrad einer benachbarten Getriebeeinheit kämmt. Nach der Montage des Gangschaltgetriebemoduls an einer benachbarten Getriebeeinheit (z. B. einem Gruppenschaltgetriebemodul) stützen sich die zweiten Enden der Eingangswelle und der Festräderwelle am Bodenflansch bzw. einer geeigneten Aufnahme der benachbarten Getriebeeinheit ab. Das freie Ende der Eingangswelle des Gangschaltgetriebemoduls ist zweckmäßigerweise in einer Ausnehmung des Wellenendes einer Welle der benachbarten Getriebeeinheit drehbar gelagert. Ferner sind beide Wellen durch eine einrückbare Schaltverzahnung drehfest miteinander verbindbar. Durch ein derartiges Gangschaltgetriebemodul lassen sich 3 Vorwärtsgänge realisieren. Hierbei kann das übliche Losrad für den dritten Gang eingespart werden, weil das weitere Festrad der Festräderwelle unmittelbar mit einem auf der Getriebewelle der benachbarten Getriebeeinheit angeordneten Eingangszahnrad kämmt.

Eine bevorzugte Ausgestaltung des Gangschaltgetriebemoduls sieht vor, daß die Eingangswelle ein drittes durch eine Schalteinheit einrückbares Losrad und die Festräderwelle ein drittes Festrad trägt und daß das dritte Losrad und das dritte Festrad über ein im Gangschaltgetriebegehäuse drehbar gelagertes Umkehrrad miteinander in Eingriff stehen. Hierdurch wird ein Rückwärtsgang realisiert. Vorzugsweise ist das Gangschaltgetriebemodul am Anfang des Getriebestranges angeordnet, so daß die Schaltstelle für den Rückwärtsgang am Anfang des Getriebestranges liegt. Hierdurch kann die Schaltarbeit (z. B. Synchronarbeit) beim Umschalten von Rückwärtsfahrt auf den ersten Vorwärtsgang oder umgekehrt sehr gering gehalten werden, da lediglich die Trägheitsmassen der Kupplungsnabe mit den zugehörigen Lamellen sowie die Eingangswelle des Gangschaltgetriebemoduls beherrscht werden müssen. Dies ermöglicht es, bei noch rollendem Fahrzeug eine schnelle Umschaltung der Fahrtrichtung vorzunehmen, ohne daß die beim Umschalten betätigte Schaltstelle übermäßig belastet wird.

Gemäß einer weiteren Ausgestaltung der Erfindung ist eine der hutförmigen Getriebeeinheiten ein Gruppenschaltgetriebemodul, in dessen Bodenflansch wenigstens eine Festräderwelle und wenigstens eine Losräderwelle gelagert sind, die einander zugeordnete Paare aus Festrädern und Losrädern tragen, wobei die Losräder durch Schalteinheiten drehfest mit der Losräderwelle verbindbar sind.

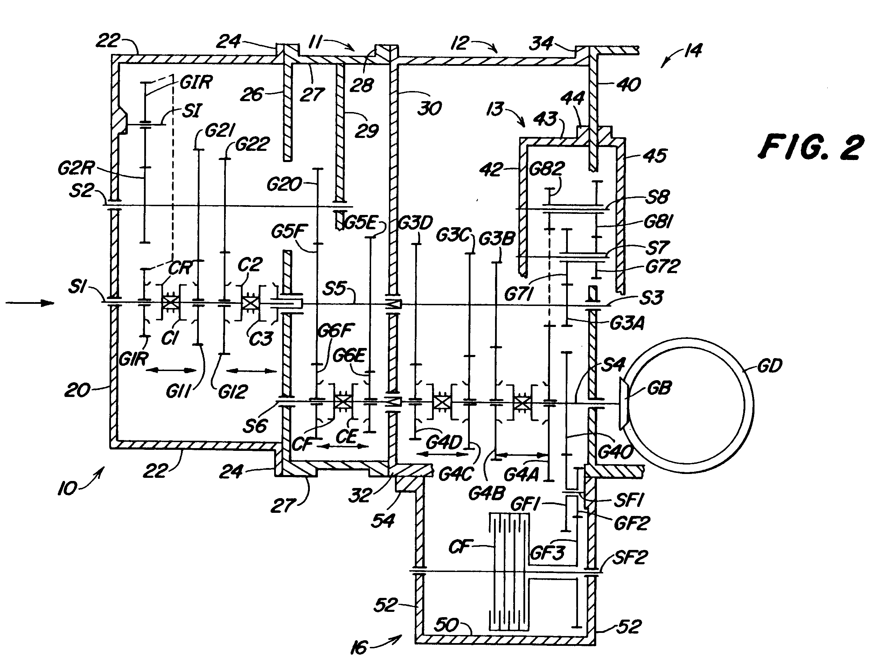

Eine weitere hutförmige Getriebeeinheit ist vorzugsweise als Zwischenschaltgetriebemodul ausgebildet, das beispielsweise zwischen einem Gangschaltgetriebemodul und einem Gruppenschaltgetriebemodul einfügbar ist. Es handelt sich bei dem Zwischenschaltgetriebe beispielsweise um ein weiteres Gruppenschaltgetriebe, durch das sich die Zahl der schaltbaren Gruppen erhöhen läßt. Auch in dem Zwischenschaltgetriebegehäuse sind eine Festräderwelle und eine Losräderwelle angeordnet, die einander zugeordnete Paare aus Festrädern und Losrädern tragen, wobei die Losräder durch Schalteinheiten drehfest mit der Losräderwelle verbindbar sind. Beide Wellen sind mit ihrem jeweils ersten Ende im Bodenflansch des Zwischenschaltgetriebegehäuses gelagert und erstrecken sich mit ihrem jeweils zweiten Ende frei in die dem Bodenflansch gegenüberliegende Öffnung des Zwischenschaltgetriebegehäuses. Die Festräderwelle dient als Eingangswelle des Zwischenschaltgetriebemoduls und ist zweckmäßigerweise mit der Festräderwelle des nachgeordneten Gruppenschaltgetriebemoduls drehfest verbunden. Ferner ist vorzugsweise die Losräderwelle mit der Losräderwelle des nachgeordneten Gruppenschaltgetriebemoduls drehfest verbunden. Die Verbindung der Wellen kann durch Kupplungsverzahnungen erfolgen. (Fig. 2).

Zur Änderung der Übersetzungsverhältnisse des Gruppenschaltgetriebemoduls (und auf entsprechende Weise auch des Zwischenschaltgetriebemoduls) lassen sich auf einfache Weise einerseits die Festräderwelle und andererseits die Losräder der Losräderwelle gegen eine andere Festräderwelle bzw. andere Losräder austauschen. Das Gruppengetriebegehäuse, die Lage der Schalteinrichtungen und die benachbarten Getriebegehäuse brauchen dabei nicht geändert zu werden. Daher können Gruppengetriebe mit unterschiedlichen Übertragungsverhältnissen unter Verwendung weitgehend gleicher Bauteile kostengünstig hergestellt werden.

Beim Zusammenbau kann zunächst eine ausgewählte Festräderwelle und eine für alle Anwendungen gleiche Losräderwelle in Lagerstellen des sich auf der offenen Seite des Gruppenschaltgetriebemoduls anschließenden Getriebegehäuses, z. B. des Differentialgetriebegehäuses montiert werden. Dann werden die Losräder und Schalteinheiten ausgewählt und auf der Losräderwelle montiert. Hierauf wird das hutförmige Gruppenschaltgetriebegehäuse über die Wellen gestülpt, so daß die ersten Enden der Wellen von Lagerstellen im Bodenflansch des Gruppenschaltgetriebegehäuses aufgenommen werden. Schließlich wird der auf der offenen Seite des Gruppenschaltgetriebegehäuses liegende Flansch am Differentialgetriebegehäuse befestigt.

An die Außenseite des Bodenflanschs des Gruppenschaltgetriebegehäuses schließt sich vorzugsweise die offene Seite des Gangschaltgetriebegehäuses an. Ferner kämmt ein Festrad der Festräderwelle des Gangschaltgetriebemoduls mit einem Festrad der Festräderwelle des Gruppenschaltgetriebemoduls. Hierdurch kann, wie bereits erwähnt, ein Zahnrad für den dritten Gang eingespart werden. Die Festräderwelle des Gruppenschaltgetriebemoduls ragt zweckmäßigerweise durch eine Öffnung in dem Bodenflansch des Gruppenschaltgetriebemoduls in dieses hinein.

Eine weitere Ausgestaltung der Erfindung sieht vor, daß ein Festrad der Festräderwelle des Gruppenschaltgetriebemoduls (oder des Zwischenschaltgetriebemoduls) als Eingangszahnrad dient und einerseits mit dem weiteren Festrad der Festräderwelle des Gangschaltgetriebemoduls und andererseits mit einem Losrad der Losräderwelle des Gruppenschaltgetriebemoduls kämmt. Das Eingangszahnrad erfüllt somit zwei Aufgaben: erstens ist es wirkungsmäßig Bestandteil des Gangschaltgetriebemoduls, in dem es den Kraftfluß von der Festräderwelle des Gangschaltgetriebemoduls aufnimmt, und zweitens ist es Bestandteil des Gruppenschaltgetriebemoduls und bedient ein durch eine Schaltstelle schaltbares Losrad. Es kann somit gegenüber einem konventionellen Getriebe ein Zahnrad entfallen.

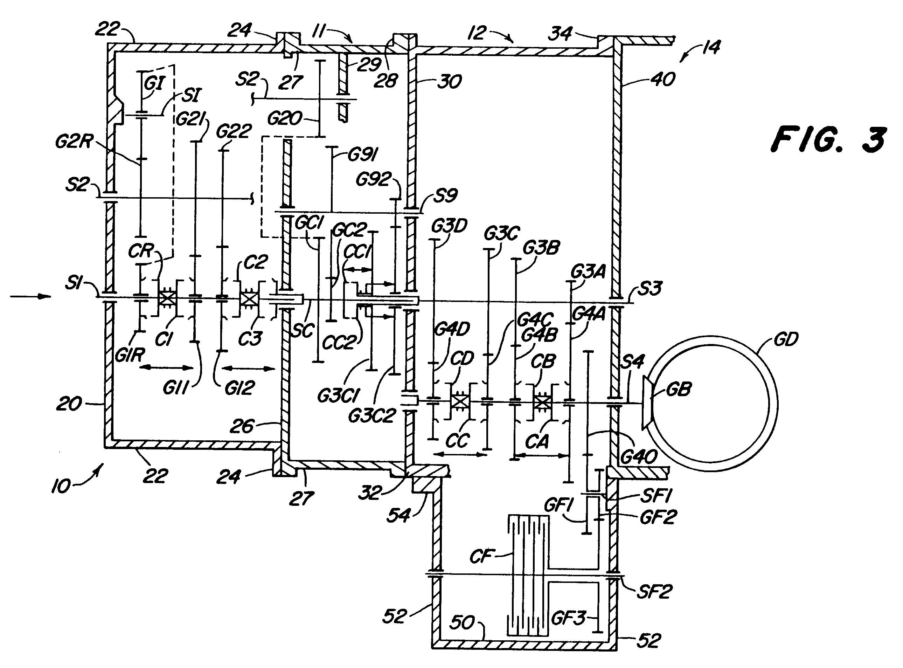

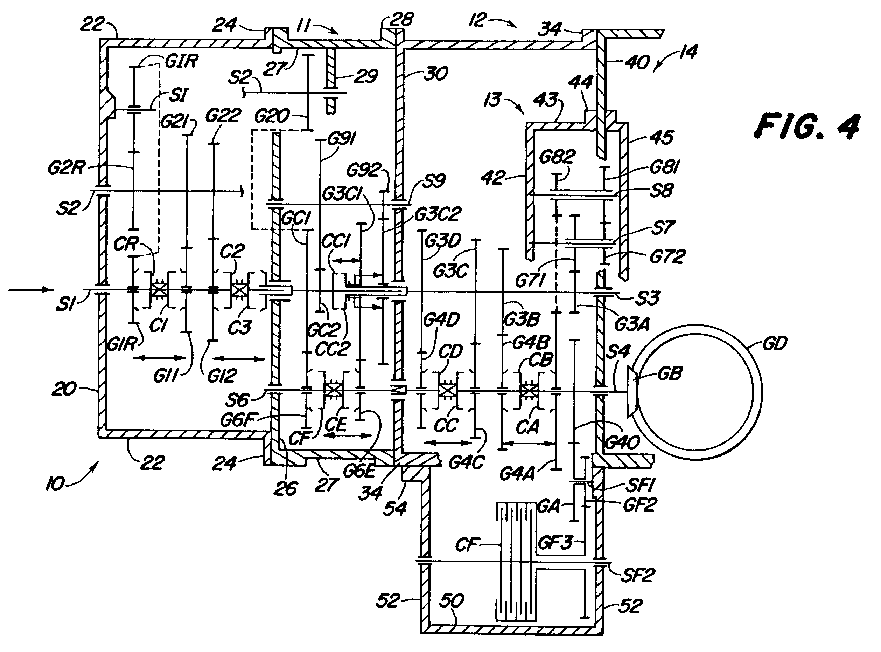

Gemäß einer bevorzugten Ausgestaltung der Erfindung kann ein auf einer Losradwelle gelagertes Losrad, das mit dem Zahrad einer Festradwelle kämmt, gegen ein anderes Losrad ausgetauscht werden, das zwar den gleichen Durchmesser, jedoch eine unterschiedliche Zähnezahl aufweist. Diese Lösung ermöglicht es, daß beispielsweise bei Getrieben gemäß Fig. 3 oder 4 die Gruppen E und D unterschiedliche Übersetzungsverhältnisse bei gleichem Achsabstand haben, obwohl die Zahnräder G5F und G3D in ihrer Zahngeometrie gleich sind. Daher läßt sich das Gruppenschaltgetriebemodul ohne Räderaustausch auch unmittelbar an Stelle des Zwischenschaltgetriebemoduls an dem Gangschaltgetriebemodul anflanschen.

Eine unterschiedliche Zähnezahl, wie im oben beschriebenen Fall bei sonst gleichen Zahnrädern und gleichbleibendem Achsabstand läßt sich durch das Prinzip der Profilverschiebung erreichen, die es ermöglicht, die Zähnezahl eines mit einem gleichen Basiszahnrad kämmenden Zahnrades in gewissen Grenzen gegenüber einer optimalen Zähnezahl zu erhöhen oder zu vermindern. Beispielsweise können mit einem Basiszahnrad zwei unterschiedliche Zahnräder kämmen, deren Zähnezahl sich um beispielsweise 3 bis 4 Zähne unterscheiden.

Vorzugsweise ist eine weitere hutförmige Getriebeeinheit als Kriechgangschaltgetriebemodul ausgebildet, das sich beispielsweise zwischen das Gangschaltgetriebegehäuse und das Gruppenschaltgetriebegehäuse einfügen läßt. In dem Kriechgangschaltgetriebegehäuse sind eine Kriechgangeingangswelle und eine Nebenwelle angeordnet, die mit ihrem jeweils ersten Ende im Bodenflansch des Kriechgangschaltgetriebemoduls gelagert sind und sich mit ihrem jeweils zweiten Ende frei in die dem Bodenflansch gegenüberliegende Öffnung des Kriechgangschaltgetriebegehäuses erstrecken. Das auf der Kriechgangeingangswelle angeordnete Festrad kämmt mit einem relativ großen Festrad der Nebenwelle, und ein relativ kleines Festrad der Nebenwelle kämmt mit einem konzentrisch zur Kriechgangeingangswelle gelagerten Losrad. Ferner läßt sich die Kriechgangeingangswelle oder das Losrad wahlweise drehfest mit der Festräderwelle des nachgeordneten Gruppenschaltgetriebemoduls in Eingriff bringen (Fig. 3).

Vorzugsweise ist das zweite Ende der Kriechgangeingangswelle drehbar in einer Ausnehmung der Festräderwelle des nachgeordneten Gruppenschaltgetriebemoduls gelagert. Ferner ist es von Vorteil, wenn auf einem drehfest mit der Festräderwelle eines nachgeordneten Gruppenschaltgetriebemoduls verbundenen Wellenabschnitt eine Schalteinrichtung, beispielsweise eine Schaltmuffe, angeordnet ist, die die Festräderwelle des Gruppenschaltgetriebemoduls wahlweise mit einem drehfest auf der Kriechgangeingangswelle angeordneten Kupplungskörper oder dem Losrad kuppelt.

Eine Ausgestaltung der Erfindung, die eine sehr kompakte Bauweise ermöglicht, sieht vor, daß im Bereich des freien zweiten Endes der Kriechgangeingangswelle ein zu dieser konzentrischer hohler Wellenabschnitt drehbar gelagert ist, der über eine Keilverzahnung drehfest mit der Festräderwelle des nachgeordneten Gruppenschaltgetriebemoduls verbindbar ist. Der hohle Wellenabschnitt trägt in seinem mittleren Bereich ein drehfestes Zahnrad, im Bereich eines seiner Enden eine Verzahnung, die mit einer axial verschiebbaren Schalteinrichtung (Schaltmuffe) in Eingriff steht, und im Bereich seines anderen Endes ein drehbares Losrad, das mit einem Festrad der Nebenwelle kämmt. Ferner ist mit der Schalteinrichtung wenigstens ein Schaltstift verbunden, der sich durch eine Ausnehmung in dem drehfesten Zahnrad erstreckt und durch Verschieben der Schalteinrichtung wahlweise in eine Ausnehmung des drehbaren Losrades einführbar ist, so daß das Losrad gegenüber der Festräderwelle des Gruppenschaltgetriebemoduls festgesetzt wird.

Diese Ausgestaltung ist besonders vorteilhaft, denn um die gleiche Funktion ohne Zuhilfenahme der Schaltstiftschaltung zu realisieren, wären zusätzlicher Raum, zusätzliche Zwischenzahnräder und eine zusätzliche Schaltstelle erforderlich. Die Stiftschaltung ermöglicht daher eine sehr kompakte Bauweise.

Vorzugsweise läßt sich durch die Schalteinrichtung eine drehfeste Schaltverzahnung der Kriechgangeingangswelle mit der Festräderwelle des nachgeordneten Gruppenschaltgetriebemoduls drehfest verbinden. Durch die Schalteinrichtung (Schaltmuffe) kann damit wahlweise entweder die Kriechgangeingangswelle unmittelbar mit der Hohlwelle und damit mit der Festräderwelle des nachgeordneten Gruppenschaltgetriebemoduls verbunden werden (Kriechganggetriebemodul ist wirkungslos), oder mit der Schalteinrichtung können die Schaltstifte in die Ausnehmungen des Losrades eingeführt werden, wodurch das Losrad auf der Hohlwelle festgesetzt wird (Kriechgang ist eingeschaltet).

Wie bereits anhand des Zwischenschaltgetriebes erläutert, kann auch die Kriechgangeingangswelle ein weiteres Festrad tragen, das als Eingangszahnrad dient und mit dem weiteren Festrad der Festräderwelle des Gangschaltgetriebemoduls kämmt. Auch bei dieser Lösung erfüllt das Eingangszahnrad die bereits beschriebenen Aufgaben.

Um in das Kriechganggetriebegehäuse zwei Stufen eines Gruppenschaltgetriebemoduls zu integrieren, ist in dem Kriechganggetriebemodul eine Losräderwelle vorgesehen, deren durch eine Schalteinrichtung schaltbaren beiden Losräder mit dem Eingangszahnrad der Kriechgangeingangswelle bzw. dem drehfesten Zahnrad der Hohlwelle kämmen (Fig. 4). Hierbei sind die Losräderwelle des Kriechgangschaltgetriebemoduls und die Losräderwelle eines dem Kriechgangschaltgetriebemodul nachgeordneten Gruppenschaltgetriebemoduls vorzugsweise miteinander drehfest verbunden. Ferner ist es zweckmäßig, daß zum einen das Losrad, das auf der Losräderwelle des Kriechgangschaltgetriebemoduls gelagert ist und mit dem Eingangszahnrad des Kriechgangschaltgetriebemoduls kämmt, und zum anderen das Losrad, das auf der Losräderwelle eines dem Kriechgangschaltgetriebemodul nachgeordneten Gruppenschaltgetriebemoduls gelagert ist und das mit dem als Eingangszahnrad verwendbaren auf der Festräderwelle des Gruppenschaltgetriebemoduls gelagerten Festrad kämmt, Zahnräder mit gleichen Durchmessern jedoch unterschiedlicher Zähnezahlen sind. Auch bei dieser Lösung kann somit das oben angegebene Prinzip der Profilverschiebung ausgenützt werden.

Einer weiteren Ausgestaltung der Erfindung zufolge ist eine Getriebeeinheit als Vorderradantriebsgetriebemodul ausgebildet, dessen Vorderantriebsgetriebegehäuse unten an dem Gruppenschaltgetriebegehäuse an dessen Mantelbereich befestigbar ist, wobei eine Eingangsverzahnung des Vorderradantriebsgetriebemoduls mit einer auf der Losräderwelle des Gruppenschaltgetriebemoduls festgelegten Verzahnung in Verbindung steht. In dem Vorderradantriebsgetriebegehäuse ist zweckmäßigerweise eine Abtriebswelle gelagert, die mittels einer Kupplung mit einem auf der Abtriebswelle gelagerten Losrad kuppelbar ist. Auf einer im Vorderradantriebsgetriebegehäuse gelagerten Nebenwelle ist ein Zahnrad mit zwei Verzahnungen drehbar gelagert, dessen erste Verzahnung eine Eingangsverzahnung des Vorderradantriebsgetriebemoduls ist und dessen zweite Verzahnung mit dem Losrad kämmt.

Diese Ausbildung läßt eine sehr einfache Änderung des Übersetzungsverhältnisses zu, die beispielsweise beim Austausch der Vorderräder des Fahrzeuges gegen Vorderräder mit einem anderen Durchmesser erforderlich wird. In diesem Fall braucht lediglich das Losrad sowie das Zahnrad mit den zwei Verzahnungen ausgetauscht zu werden, welche im Vorderradantriebsgehäuse gelagert sind.

Auf der Losräderwelle des Gruppenschaltgetriebemoduls ist ein Zahnrad festgelegt, das als Antriebszahnrad für ein Vorderradantriebsgetriebemodul geeignet ist. Das Zahnrad dient vorzugsweise gleichzeitig zum Eingriff einer Parksperre. Durch die Parksperre kann somit der Antrieb an die Hinterräder des Fahrzeuges blockiert werden. Ist der Vorderradantrieb eingeschaltet, so wirkt die Parksperre sowohl auf die Vorder- als auch auf die Hinterräder.

Als weitere erfindungsgemäße Getriebeeinheit ist ein Vorgelege mit einem innerhalb des Gruppenschaltgetriebegehäuses befestigbaren Vorgelegegehäuse vorgesehen. Das Vorgelegegehäuse kann an der äußeren Seite des Differentialgehäuses befestigt sein und in das Gruppenschaltgetriebegehäuse hineinragen. In dem Vorgelegegehäuse sind zwei Achsen zur drehbaren Aufnahme von Zahnrädern angeordnet. Eine Eingangsverzahnung des Vorgeleges kämmt mit einem Festrad der Festräderwelle des Gruppenschaltgetriebemoduls. Ferner kämmt eine Ausgangsverzahnung des Vorgeleges mit einem Losrad der Losräderwelle des Gruppenschaltgetriebemoduls.

Vorzugsweise nehmen die beiden Wellen des Vorgeleges je ein Zahnrad mit zwei Verzahnungen auf, wobei je eine Verzahnung der beiden Zahnräder miteinander kämmen und wobei die übrigen beiden Verzahnungen der Zahnräder die Eingangsverzahnung und die Ausgangsverzahnung bilden.

Das Vorgelege ermöglicht es, eine Gruppe (im beschriebenen Ausführungsbeispiel die Gruppe A) auf spezielle Kundenwünsche anzupassen. Beispielsweise kann durch ein Vorgelege eine relativ langsame Gruppe bereitgestellt werden. Solche langsamen Gruppen werden beispielsweise beim Pflanzen gefordert. Die Anpassung erfordert lediglich den Anbau oder Austausch des Vorgeleges und gegebenenfalls des Eingangs- und/oder Ausgangszahnrades. Da dies ein einfaches Bauteil ist und für die wirtschaftliche Herstellung keine großen Produktionsserien erforderlich sind, können auch Einzelwünsche der Kunden erfüllt werden.

Gemäß einer weiteren Ausgestaltung der Erfindung ist an Stelle des Gangschaltgetriebemoduls ein Lastschaltgetriebemodul verwendbar, dessen Gehäuse an dem Getriebegehäuse der nachfolgenden Getriebeeinheit befestigbar ist und dessen Ausgangswelle mit der Eingangswelle der nachfolgenden Getriebeeinheit drehfest verbindbar ist. Vorzugsweise weist das Lastschaltgetriebemodul eine Reversiereinrichtung auf.

Anhand der Zeichnung, die einige Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: ein modular ausgebildetes Getriebe mit 12 Vorwärts- und 4 Rückwärtsgängen und wahlweise zuschaltbarem Frontantrieb,
- Fig. 2: ein modular ausgebildetes Getriebe mit 18 Vorwärts- und 6 Rückwärtsgängen und wahlweise zuschaltbarem Frontantrieb,
- Fig. 3: ein 12-Ganggetriebe gemäß Fig. 1, dem ein Kriechganggetriebe hinzugefügt ist und
- Fig. 4: ein 18-Ganggetriebe gemäß Fig. 2, dem ein Kriechganggetriebe hinzugefügt ist.

Der Übersichtlichkeit halber wurde in der folgenden Beschreibung hinsichtlich der Bezugszeichen folgende Konvention gewählt: alle Wellen beginnen mit dem Buchstaben S (shaft), alle Zahnräder beginnen mit dem Buchstaben G (gear), und alle Kupplungen beginnen mit dem Buchstaben C (clutch). Bei den Wellen folgt auf den Buchstaben S eine Ziffer, die die fortlaufende Nummer der Welle bezeichnet. Mit Ausnahme einiger weniger Zahnräder des Differentials, des Vorderradantriebsgetriebemoduls und des Kriechganggetriebemoduls folgt bei den Zahnrädern auf den ersten Buchstaben G eine Ziffer, die die Nummer der Welle bezeichnet, auf der das Zahnrad angeordnet ist. Auf diese Ziffer folgt ein Buchstabe, der den Gang oder den Bereich angibt, den das Zahnrad in Eingriff bringt. Beispielsweise ist das Zahnrad G2R auf der zweiten Welle angeordnet und wirkt als eines der Zahnräder des Rückwärtsantriebsstranges. Entsprechend gibt der auf den ersten Buchstaben C folgende zweite Buchstabe des Bezugszeichens für eine Kupplung den Gang oder Bereich an, welcher durch die Kupplung ein- oder ausrückbar ist. Ferner beziehen sich im folgenden die Bezeichnungen "rechts", "oben" und dergleichen lediglich darauf, wie die Komponenten in der Zeichnung dargestellt sind. Diese Angaben sollen nicht als Beschränkung hinsichtlich der räumlichen Lage der Komponenten einer tatsächlichen Getriebeanordnung angesehen werden.

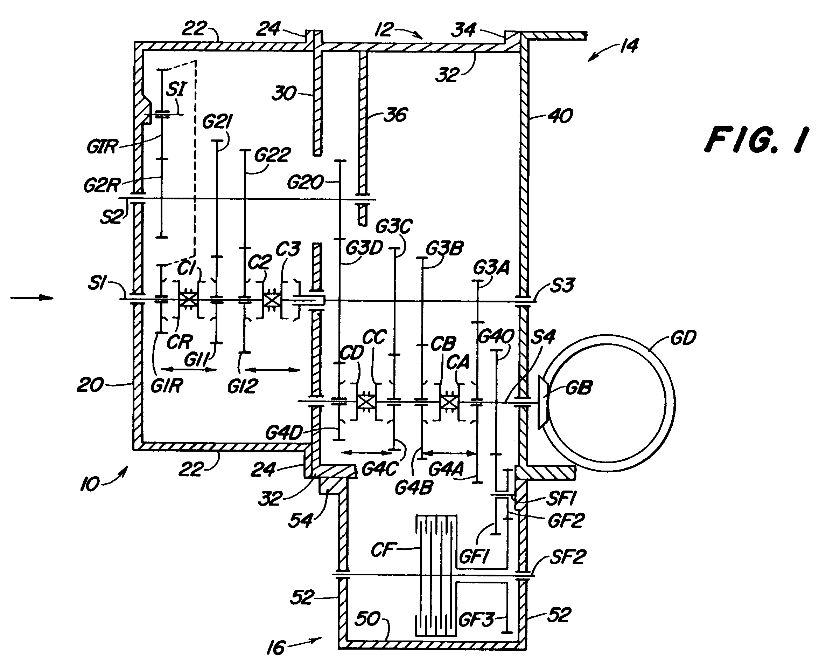

Fig. 1 stellt ein Gangschaltgetriebemodul 10, ein Gruppenschaltgetriebemodul 12, ein Differentialgehäuse 14 und ein Vorderradantriebsgetriebemodul 16 dar. Das Gangschaltgetriebemodul 10 ist im wesentlichen hutförmig ausgebildet, d. h. es weist einen Bodenflansch 20 und Mantelflächen 22 auf und ist auf der dem Bodenflansch 20 gegenüberliegenden Seite offen. Vorzugsweise ist im Bereich der offenen Seite ein geeigneter Flansch 24 vorgesehen, durch den das Gangschaltgetiebemodul 10 an einem benachbarten Getriebemodul befestigbar ist. Das benachbarte Getriebemodul kann beispielsweise, wie in Fig. 1 dargestellt, ein Gruppenschaltgetriebemodul 12 sein.

Das Gruppenschaltgetriebemodul 12 ist auf ähnliche Weise ebenfalls hutförmig ausgebildet und enthält einen Bodenflansch 30, Mantelflächen 32 und einen Flansch 34. Ferner enthält das Gruppenschaltgetriebemodul 12 vorzugsweise eine innere Wandung 36, die als Wellentragstruktur ausgebildet ist, worauf noch eingegangen wird.

Das Differentialgehäuse 14 kann eine beliebige geeignete Form aufweisen, sofern es eine Grundfläche 40 aufweist, durch die es die offene Seite des Gruppenschaltgetriebemoduls 12 abdeckt. Soll aus irgend einem Grund das Gruppenschaltgetriebemodul 12 nicht unmittelbar am Differentialgehäuse 14 angeordnet, sondern zu diesem beabstandet angeordnet werden, so kann jedoch auch dieses Erfordernis entfallen, indem die offene Seite des Gruppenschaltgetriebemoduls 12 nicht durch die Grundfläche 40, sondern durch eine anderweitige Platte verschlossen wird.

Das Vorderradantriebsgetriebemodul 16 ist ebenfalls hutförmig ausgebildet und enthält einen Bodenflansch 50, Mantelflächen 52 und einen Flansch 54, mit dem es über einer Öffnung in der Mantelfläche 32 des Gruppenschaltgetriebemoduls 12 befestigbar ist. Die offene Seite des Vorderradantriebsgetriebemoduls 16 ist durch die Mantelfläche 32 des Gruppenschaltgetriebemoduls 12 verschlossen.

Um die verschiedenen Wellen zu lagern und um es zu ermöglichen, daß sich die Wellen von einem Getriebemodul 10, 12, 14, 16 in den anderen erstrecken, enthalten die Bodenflansche 20, 30, 40 und die Mantelflächen 32, 52 der Getriebemodule 10, 12, 14, 16 geeignete Durchgänge. Werden bestimmte Wellen oder Durchgänge bei einem bestimmten Anwendungsfall nicht benötigt, so können die Durchgänge durch entsprechende, nicht dargestellte Abdeckungen verschlossen werden. Wird beispielsweise kein Vorderradantrieb verlangt, kann das Vorderradantriebsgetriebemodul 16 entfallen und es kann eine Abdeckung über die Öffnung in der Mantelfläche 32 des Gruppenschaltgetriebemoduls 12 geschraubt werden.

Eine Welle S1 ist drehbar in dem Gangschaltgetriebemodul 10 angeordnet und fluchtet mit einer Welle S3, die sich innerhalb des Gruppenschaltgetriebemoduls 12 befindet. Das rechte Ende der Welle S3 ist drehbar in dem Bodenflansch 40 des Differentialgehäuses 14 gelagert. Das linke Ende der Welle S3 ist drehbar in dem Bodenflansch 30 des Gruppenschaltgetriebemoduls 12 gelagert. Das linke Ende der Welle S1 ist drehbar in dem Bodenflansch 20 des Gangschaltgetriebemoduls 10 gelagert, und ihr rechtes Ende ist drehbar innerhalb einer Ausnehmung in dem linken Ende der Welle S3 gelagert.

Auf der Welle S1 sind die Zahnräder G1R, G11, G12 drehbar gelagert. Ferner sind auf der Welle S1 die Kupplungen CR, C1, C2, C3 angeordnet. Durch die Kupplungen CR, C1, C2 lassen sich die Zahnräder G1R, G11, G12 wahlweise drehfest mit der Welle S1 verbinden, und durch die Kupplung C3 sind wahlweise die Wellen S1 und S3 drehfest miteinander verbindbar.

Das linke Ende einer Welle S2 ist drehbar in dem Bodenflansch 20 des Gangschaltgetriebemoduls 10 gelagert. Das rechte Ende der Welle S2 ragt durch eine Öffnung im Bodenflansch 30 des Gruppenschaltgetriebemoduls 12 in diesen hinein und ist in der inneren Wandung 36 des Gruppenschaltgetriebemoduls 12 drehbar gelagert. Auf der Welle S2 sind die Zahnräder G2R, G21, G22, G20 drehfest angeordnet. Die Zahnräder G21 und G22 kämmen mit den Zahnrädern G11 bzw. G12. Das Zahnrad G20 der Welle S2 befindet sich innerhalb des Gruppenschaltgetriebemoduls 12.

Der Bodenflansch 20 des Gangschaltgetriebemoduls 10 trägt eine Leerlaufachse (idler shaft) SI, auf der ein Rückwärtsgangzahnrad GIR drehbar gelagert ist, welches ständig mit den Zahnrädern G2R und G1R kämmt.

Auf der Welle S3 sind die Zahnräder G3D, G3C, G3B, G3A drehfest angeordnet. Das Zahnrad G3D kämmt ständig mit dem Zahnrad G20.

Das linke Ende einer Welle S4 ist im Bodenflansch 30 des Gruppenschaltgetriebemoduls 12, und das rechte Ende dieser Welle S4 ist im Bodenflansch 40 des Differentialgehäuses 14 drehbar gelagert. Auf der Welle S4 sind innerhalb des Gruppenschaltgetriebemoduls 12 die Zahnräder G4D, G4C, G4B, G4A drehbar gelagert.

Ferner trägt die Welle S4 innerhalb des Gruppenschaltgetriebemoduls 12 ein drehfestes Zahnrad G40 und innerhalb des Differentialgehäuses 14 ein drehfestes Kegelrad GB. In dem Differentialgehäuse 14 ist auch ein Differentialzahnrad GD drehbar angeordnet, mit dem das Kegelrad GB ständig kämmt. Die Zahnräder G4D, G4C, G4B, G4A lassen sich wahlweise durch zugehörige Kupplungen SD, SS, SB, SA drehfest mit der Welle S4 verbinden.

Eine Welle SF1 wird durch eine Mantelfläche 52 des Vorderradantriebsgetriebegehäuses 16 drehfest getragen. Auf ihr ist ein Doppelzahnrad drehbar gelagert, welches zwei Verzahnungen GF1, GF2 aufweist. Die Verzahnung GF1 kämmt ständig mit dem Zahnrad G40. Eine Welle SF2 stützt sich drehbar auf zwei Mantelflächen 52 des Vorderradantriebsgetriebegehäuses 16 ab. Sie ragt mit wenigstens einem (nicht dargestellten) Ende aus dem Vorderradantriebsgetriebegehäuses 16 heraus, um die Verbindung mit dem Vorderradantriebsmechanismus herzustellen. Auf der Welle SF2 ist das Zahnrad GF3 drehbar angeordnet, welches in ständigem Eingriff mit der Verzahnung GF2 steht und durch eine Kupplung CF wahlweise mit der Welle SF2 drehfest verbindbar ist.

Es ist aus der Fig. 1 und der vorstehenden Beschreibung ersichtlich, daß bei einer Leistungseinspeisung in das linke Ende der Welle S1 eine Bedienungsperson durch Schalten einer der Kupplungen CR, C1, C2, C3 zwischen dem Rückwärtsgang, dem 1., 2. und dem 3. Gang wählen kann. Dabei erfolgt der Leistungsabfluß aus dem Gangschaltgetriebemodul 10 von der Welle S1 auf die Welle S3 entweder unmittelbar durch Einrücken der Kupplung C3 oder indirekt durch Einrücken einer der Kupplungen CR, C1 oder C2 über die Welle S2 und die Zahnräder G20 und G3D. Die Bedienungsperson kann dann wahlweise eine der Kupplungen CD, CC, CB oder CA aktivieren, um zwischen den unterschiedlichen Bereichen D, C, B bzw. A zu wählen. Die Welle S4 gibt die Ausgangsleistung aus dem Gruppenschaltgetriebemodul 12 über das Kegelrad GB an das Differentialzahnrad GD ab. Ist ein Vorderradantriebsgetriebemodul 16 (wie dargestellt) angebaut, so kann die Ausgangsleistung sich verzweigen und ein Teil über das Zahnrad G40 an den Vorderradantriebsgetriebemodul 16 abgegeben werden. Wird die Kupplung CF eingerückt, so wird Leistung an die nicht dargestellten Vorderräder abgegeben. Falls kein Vorderradantriebsgetriebemodul 16 vorgesehen ist, kann prinzipiell auch das Zahnrad G40 weggelassen werden.

Im Unterschied zu der in Fig. 1 dargestellten Getriebeanordnung enthält die Getriebeanordnung gemäß Fig. 2 zwei weitere Getriebemodule. Zwischen das Gangschaltgetriebemodul 10 und das Gruppenschaltgetriebemodul 12 ist ein Zwischenschaltgetriebemodul 11 eingefügt, das ebenfalls im wesentlichen hutförmig ausgebildet ist und einen Bodenflansch 26, Mantelflächen 27 und einen Flansch 28 enthält. Wie gezeigt, wird die offene Seite des Gangschaltgetriebemoduls 10 im wesentlichen durch den Bodenflansch 26 des Zwischenschaltgetriebemoduls 11 verschlossen, während der Bodenflansch 30 des Gruppenschaltgetriebemoduls 12 im wesentlichen die offene Seite des Zwischenschaltgetriebemoduls 11 verschließt. Das Zwischenschaltgetriebemodul 11 weist auch eine Zwischenwand 29 auf, die sich im wesentlichen an einer der inneren Wandung 36 des in Fig. 1 dargestellten Gruppenschaltgetriebemoduls 12 entsprechenden Stelle befindet. Die innere Wandung 36 des Gruppenschaltgetriebemoduls 12 kann bei dem Ausführungsbeispiel gemäß Fig. 2 entfallen, falls dies als zweckmäßig angesehen wird, sie kann jedoch auch beibehalten werden, um einen einfachen, späteren Getriebeumbau zu ermöglichen.

Auch in dem in Fig. 2 dargestellten Ausführungsbeispiel sind die Wellen S3 und S4 in den Bodenflanschen 30 und 40 drehbar gelagert. Während jedoch gemäß Fig. 1 das linke Ende der Welle S3 die Welle S1 aufnahm, trägt es nun das rechte Ende einer Welle S5, die sich in dem Zwischenschaltgetriebemodul 11 erstreckt. Während gemäß Fig. 1 die Welle S1 in der Welle S3 drehbar gelagert ist, ist gemäß Fig. 2 die Welle S5 über Keilverzahnungen oder dergleichen mit der Welle S3 drehfest verbunden. Das linke Ende der Welle S5 ist drehbar in dem Bodenflansch 26 des Zwischenschaltgetriebemoduls 11 gelagert und nimmt in einer Lagerstelle das rechte Ende der Welle S1 auf im wesentlichen gleiche Weise drehbar auf, wie es anhand der Fig. 1 für die Verbindung zwischen der Welle S1 und der Welle S3 beschrieben wurde. Auch in dem Ausführungsbeispiel gemäß Fig. 2 läßt sich durch die Kupplung C3 die Welle S5 (und damit indirekt auch die Welle S3) mit der Welle S1 drehfest verbinden. Die Welle S5 trägt drehfest die Zahnräder G5F und G5E. Das Zahnrad G20 kämmt ständig mit dem Zahnrad G3D.

In den Bodenflanschen 26 und 30 ist innerhalb des Zwischenschaltgetriebemoduls 11 eine Welle S6 drehbar gelagert. Ihr eines Ende ist über eine Keilverzahnung oder auf andere Weise drehfest mit der Welle S4 verbunden. Auf der Welle S6 sind die Zahnräder G6F und G6E drehbar gelagert und kämmen ständig mit den Zahnrädern G5F bzw. G5E. Die Welle S6 trägt die Kupplungen CF und CE, durch die sich die Zahnräder G6F und G6E wahlweise mit der Welle S6 drehfest verbinden lassen.

Es ist ersichtlich, daß durch die beiden zusätzlichen Zahnräder G6F und G6E und die zugehörigen Kupplungen CF und CE zwei weitere Bereiche zu den anhand der Fig. 1 beschriebenen Bereichen A bis D hinzugefügt werden. Hierdurch wird das 12-Ganggetriebe mit seinen 4 Rückwärtsgängen der Fig. 1 in ein 18-Ganggetriebe mit 6 Rückwärtsgängen umgewandelt.

Aus Fig. 2 geht auch ein Zusatzgetriebemodul 13 hervor, das ebenfalls hutförmig ausgebildet ist. Das Zusatzgetriebemodul 13 enthält einen Bodenflansch 42, eine Mantelfläche 43 und einen Flansch 44, durch den das Zusatzgetriebemodul 13 an der Bodenfläche 40 des Differentialgehäuses 14 befestigbar ist. Eine korrespondierende Deckplatte 45 ist auf der anderen Seite der Bodenfläche 40 innerhalb des Differentialgehäuses 14 befestigt.

Zwischen dem Bodenflansch 42 und der Deckplatte 45 erstrecken sich die Wellen S7 und S8, die durch den Bodenflansch 42 drehfest getragen werden. Auf der Welle S7 ist ein Doppelzahnrad drehbar gelagert, welches zwei Verzahnungen G71, G72 aufweist. Die Verzahnung G71 kämmt ständig mit dem Zahnrad G3A. Auf der Welle S8 ist ebenfalls ein Doppelzahnrad drehbar gelagert, das zwei Verzahnungen G81, G82 aufweist. Die Verzahnung G81 kämmt ständig mit der Verzahnung G72, und die Verzahnung G82 kämmt ständig mit dem Zahnrad G4A.

Es ist ersichtlich, daß durch die Zahnradanordnung des Zusatzgetriebemoduls 13 die Untersetzung des Bereichs A weiter vermindert wird. Das im Zusammenhang mit dem 18-Ganggetriebe dargestellte Zusatzgetriebemodul 13 kann, falls dies gewünscht wird, auch bei einem 12-Ganggetriebe hinzugefügt werden.

Die Zahnradanordnung des Zusatzgetriebemoduls 13 läßt sich ohne Schwierigkeiten verändern und auf unterschiedliche Anforderungen abstimmen. Durch Austauschen der auf den Wellen S7 und S8 drehbar gelagerten Doppelzahnräder lassen sich leicht große Änderungen der Untersetzungsverhältnisse realisieren. Ferner kann die Deckplatte 45 entfallen, wenn anderweitige Befestigungsmöglichkeiten für die Wellen S7 und S8 vorgesehen sind.

Auch bei der in Fig. 3 dargestellten Ausgestaltung befindet sich zwischen dem Gangschaltgetriebemodul 10 und dem Gruppenschaltgetriebemodul 12 ein Zwischenschaltgetriebemodul 11. Hier wurde jedoch an Stelle der zusätzlichen Bereichszahnräder ein Kriechganggetriebe eingefügt. Zur Verdeutlichung wurde der Querschnitt durch das Getriebe leicht abgeändert dargestellt, indem die Welle S2 geteilt und mit ihrem rechten, in das Zwischenschaltgetriebemodul 11 hineinragenden Ende in der Nähe der oberen Mantelfläche 27 gezeigt ist. Der äußere Getriebeaufbau stimmt im wesentlichen mit dem in Fig. 2 dargestellten überein.

Bei dem Ausführungsbeispiel gemäß Fig. 3 ist eine Kriechgangwelle SC in etwa an der gleichen Stelle angeordnet wie die Welle S5 in dem Ausführungsbeispiel gemäß Fig. 2, das heißt das rechte Ende der Kriechgangwelle SC wird von der Welle S3 getragen, und ihr linkes Ende ist in dem Bodenflansch 26 gelagert und trägt drehbar die Welle S1. Wie bei der Welle S5 ist das linke Ende der Kriechgangwelle SC durch eine Kupplung C3 drehfest mit der Welle S1 verbindbar. Abweichend von der Welle S5 ist das rechte Ende der Kriechgangwelle SC drehbar in der Welle S3 gelagert und steht nicht über eine Keilverzahnung mit dieser in Verbindung. Auf der Kriechgangwelle SC sind die Zahnräder GC1 und GC2 drehfest angeordnet, wobei das Zahnrad GC1 ständig mit dem Zahnrad G20 kämmt. Das Zahnrad G3C1 ist drehfest auf einem Abschnitt der Welle S3 angeordnet, der in das Zwischenschaltgetriebemodul 11 hineinragt. Das Zahnrad G3C2 ist drehbar über dem selben Abschnitt der Welle S3 gelagert.

Eine Welle S9 ist drehbar zwischen den Bodenflanschen 26 und 30 gelagert und trägt drehfest die beiden Zahnräder G91 und G92, die ständig mit den Zahnrädern GC2 bzw. G3C2 kämmen.

Die Kriechgangwelle SC trägt die Kupplungen CC1 und CC2. Durch die Kupplung CC1 läßt sich die Welle S3 drehfest mit der Kriechgangwelle SC verbinden, so daß der Kriechgang umgangen wird. Bei der Kupplung CC2 handelt es sich vorzugsweise um eine Schaltstiftkupplung, durch die wahlweise die Welle S3 drehfest mit dem Zahnrad G3C2 verbindbar ist, um den Kriechgang einzuschalten.

Die Fig. 4 zeigt ein Getriebe, das alle bisher beschriebenen Module enthält. Dieser Getriebeaufbau ist dem in Fig. 3 dargestellten ähnlich, enthält jedoch zusätzlich die Welle S6 mit den zugehörigen Zahnrädern G6F, G6E und Kupplungen CF, CE, die anhand der Fig. 2 beschrieben wurden. In dieser Ausführung kämmen die Zahnräder G6F und G6E ständig mit den Zahnrädern GC1 bzw. G3C1 der Welle SC und nicht, wie in Fig. 3 dargestellt, mit den Zahnrädern G5F und G5E der Welle S5.

Es ist ersichtlich, daß die beschriebenen Getriebemodule eine extrem hohe Flexibilität hinsichtlich der Getriebemontage zulassen, bei der durch Auswahl und einfachen Zusammenbau der Getriebemodule eine Vielzahl unterschiedlicher Getriebe mit unterschiedlichen Anforderungen realisierbar ist. Ferner läßt sich bei gegebenen Getriebemodulen das genaue Übertragungsverhältnis einzelner Gruppen oder Gänge leicht den Erfordernissen anpassen, wobei ein Basiszahnrad der Übersetzung gleichbleiben kann. Dies wird dadurch erreicht, daß einige der Zahnräder gegen Zahnräder gleichen Durchmessers, jedoch unterschiedlicher Zähnezahlen ausgewechselt werden. Die Änderung des Übersetzungsverhältnisses läßt sich hierbei durch das Prinzip der Profilverschiebung erreichen. Das modular aufgebaute Getriebe besteht aus einfachen Bauteilen, die in hohen Stückzahlen und zu angemessenen Preisen herstellbar sind.

## Patentansprüche

1. Getriebe für Kraftfahrzeuge, insbesondere für landwirtschaftliche oder Nutzfahrzeuge, das mehrere Getriebeeinheiten enthält, die wahlweise modular zusammensetzbar sind und ein vielgängiges Getriebe bilden, dadurch gekennzeichnet,
- daß das Getriebe wenigstens zwei Getriebeeinheiten umfaßt, deren Getriebegehäuse jeweils im wesentlichen hutförmig ausgebildet sind und auf einer Gehäuseseite einen Bodenflansch (20, 26, 30, 42) und auf der hierzu gegenüberliegenden Seite eine Gehäuseöffnung enthalten, welche durch den Bodenflansch (26, 30, 40) eines benachbarten Getriebegehäuses nach außen verschließbar ist,
- daß jeder der beiden Getriebeeinheiten wenigstens eine Getriebewelle (S1, S2, S3, S4, S5, S6, S7, S8, S9) zugeordnet ist, die einenends in dem Bodenflansch (20, 26, 30, 42) des zugehörigen Getriebegehäuses gelagert ist und sich anderenends frei in die Gehäuseöffnung des Getriebegehäuses erstreckt, derart,
- daß das Getriebegehäuse mit der zugehörigen Getriebewelle (S1, S2, S3, S4, S5, S6, S7, S8, S9) sowie gegebenenfalls mit weiteren Komponenten eine für sich vormontierbare Getriebeeinheit bildet, und
- daß sich das frei in die Gehäuseöffnung des Getriebegehäuses erstreckende Ende der Getriebewelle (S1, S2, S3, S4, S5, S6, S7, S8, S9) am Bodenflansch (26, 30, 40) oder einer geeigneten Aufnahme (29, 36) einer benachbarten Getriebeeinheit abstützt.

2. Getriebe nach Anspruch 1, dadurch gekennzeichnet, daß zwischen dem sich frei erstreckenden Ende der Getriebewelle (S1, S5, S6) und dem benachbarten Ende einer Getriebewelle (S3, S5, S4) einer benachbarten Getriebeeinheit eine Lagerstelle ausgebildet ist.

3. Getriebe nach Anspruch 1 oder 2, dadurch gekennzeichnet, daß das in einem Bodenflansch (26, 30) gelagerte erste Ende einer Getriebewelle (S3, S4, S5, SC) einer benachbarten Getriebeeinheit eine zur Gehäuserückseite der benachbarten Getriebeeinheit hin offene Ausnehmung aufweist, die das sich frei erstreckende Ende einer Getriebewelle (S1, S5, S6) der ersten Getriebeeinheit aufnimmt und abstützt.

4. Getriebe nach einem der Ansprüche 1 bis 3, dadurch gekennzeichnet,
- daß eine der Getriebeeinheiten einen Gangschaltgetriebemodul (10) enthält mit hutförmig ausgebildetem Gangschaltgetriebegehäuse, welches eine Eingangswelle (S1) mit wenigstens zwei durch Schalteinheiten (C1, C2) einrückbaren Losrädern (G11, G12) sowie eine Festräderwelle (S2) mit wenigstens zwei mit den Losrädern (G11, G12) kämmenden Festrädern (G21, G22) aufnimmt,
- daß die Eingangswelle (S1) und die Festräderwelle (S2) mit ihrem jeweils ersten Ende im Bodenflansch (20) des Gangschaltgetriebegehäuses gelagert sind und mit ihrem jeweils zweiten Ende sich frei in die dem Bodenflansch (20) gegenüberliegende Öffnung des Gangschaltgetriebegehäuses erstrecken,
- daß die Festräderwelle (S2) im Bereich ihres zweiten, freien Endes ein weiteres Festrad (G20) trägt, das mit einem Eingangszahnrad (G3D, G5F, GC1) einer benachbarten Getriebeeinheit kämmt,
- und daß nach der Montage des Getriebes sich die zweiten Enden der Eingangswelle (S1) sowie der Festräderwelle (S2) im Bereich des Bodenflansches (26, 30) bzw. einer geeigneten Aufnahme (29, 36) der benachbarten Getriebeeinheit abstützen.

5. Getriebe nach Anspruch 4, dadurch gekennzeichnet, daß das freie Ende der Eingangswelle (S1) des Gangschaltgetriebemoduls (10) in einer Ausnehmung eine Welle (S3, S5) der benachbarten Getriebeeinheit drehbar gelagert ist und daß die Welle (S3, S5) der benachbarten Getriebeeinheit drehfest mit einer Schaltverzahnung verbindbar ist, durch die mittels einer auf der Eingangswelle (S1) des Gangschaltgetriebemoduls (10) angeordneten Schalteinheit (C3) die Eingangswelle (S1) des Gangschaltgetriebemoduls (10) mit der Welle (S3, S5) der benachbarten Getriebeeinheit drehfest verbindbar sind.

6. Getriebe nach Anspruch 4 oder 5, dadurch gekennzeichnet, daß die Eingangswelle (S1) des Gangschaltgetriebemoduls (10) ein drittes durch eine Schalteinheit (CR) einrückbares Losrad (G1R) und die Festräderwelle (S2) ein drittes Festrad (G2R) trägt und daß das dritte Losrad (G1R) und das dritte Festrad (G2R) über ein im Gangschaltgetriebegehäuse drehbar gelagertes Umkehrrad (GIR) miteinander in Eingriff stehen.

7. Getriebe nach einem der Ansprüche 4 bis 6, dadurch gekennzeichnet, daß das Gangschaltgetriebemodul (10) am Anfang des Getriebestranges angeordnet ist.

8. Getriebe nach einem der Ansprüche 1 bis 7, dadurch gekennzeichnet,
- daß eine andere der Getriebeeinheiten ein Gruppenschaltgetriebemodul (11, 12) enthält mit hutförmig ausgebildetem Gruppenschaltgetriebegehäuse, das eine Festräderwelle (S3) und eine Losräderwelle (S4) aufnimmt, die einander zugeordnete Paare aus Festrädern (G3D, G3C, G3B, G3A) und Losrädern (G4D, G4c, G4b, G4A) tragen, wobei die Losräder (G4D, G4C, G4B, G4A) durch Schalteinheiten (CD, CC, CB, CA) drehfest mit der Losräderwelle (S4) verbindbar sind, und
- daß die Festräderwelle (S3) und die Losräderwelle (S4) mit ihrem jeweils ersten Ende im Bodenflansch (30) des Gruppenschaltgetriebegehäuses gelagert sind.

9. Getriebe nach Anspruch 8, dadurch gekennzeichnet, daß das Gruppenschaltgetriebegehäuse mit seiner offenen, dem Bodenflansch (30) gegenüberliegenden Seite an einem Differentialgehäuse (14) befestigbar ist und daß die zweiten Enden der Festräderwelle (S3) und der Losräderwelle (S4) in dem Differentialgehäuse (14) gelagert sind und die Losräderwelle (S4) an ihrem zweiten Ende das Kegelrad (GB) eines Differentialgetriebes drehfest trägt.

10. Getriebe nach Anspruch 8 oder 9, dadurch gekennzeichnet,
- daß zwischen das Gangschaltgetriebegehäuse und das Gruppenschaltgetriebegehäuse eine Getriebeeinheit einfügbar ist, die ein Zwischenschaltgetriebemodul (11) mit einem hutförmigen Zwischenschaltgetriebegehäuse enthält,
- daß in dem Zwischenschaltgetriebegehäuse eine Festräderwelle (S5) und eine Losräderwelle (S6) angeordnet sind, die einander zugeordnete Paare aus Festrädern (G5F, G5E) und Losrädern (G6F, G6E) tragen, wobei die Losräder (G6F, G6E) durch Schalteinheiten (CF, CE) drehfest mit der Losräderwelle (S6) verbindbar sind,
- daß die Festräderwelle (S5) und die Losräderwelle (S6) mit ihrem jeweils ersten Ende im Bodenflansch (26) des Zwischenschaltgetriebegehäuses gelagert sind und mit ihrem jeweils zweiten Ende sich frei in die dem Bodenflansch (26) gegenüberliegende Öffnung des Zwischenschaltgetriebegehäuses erstrecken,
- daß die Festräderwelle (S5) als Eingangswelle des Zwischenschaltgetriebemoduls (11) dient und mit der Festräderwelle (S3) eines nachgeordneten Gruppenschaltgetriebemoduls (12) drehfest verbunden ist und
- daß die Losräderwelle (S6) mit der Losräderwelle (S4) des nachgeordneten Gruppenschaltgetriebemoduls (12) drehfest verbunden ist. (Fig. 2)

11. Getriebe nach Anspruch 10, dadurch gekennzeichnet, daß die Festräderwelle (S5) und die Losräderwelle (S6) des Zwischenschaltgetriebemoduls (11) über Kupplungsverzahnungen mit der Festräderwelle (S3) bzw. der Losräderwelle (S4) des nachgeordneten Gruppenschaltgetriebemoduls (12) in Verbindung stehen.

12. Getriebe nach einem der Ansprüche 8 bis 11, dadurch gekennzeichnet, daß die Losräderwelle (S4, S6) des Gruppenschaltgetriebemoduls (12) und des Zwischengetriebemoduls (11) so gestaltet ist, daß sie bei unveränderter Lage der Schalteinrichtungen (CD, CC, CB, CA, CF, CE) unterschiedliche Losrädersätze aufzunehmen vermag und daß jedem Losrädersatz eine Festräderwelle (S3, S5) mit entsprechenden Festräderverzahnungen zugeordnet ist.

13. Getriebe nach einem der Ansprüche 8 bis 12, dadurch gekennzeichnet, daß an der Außenseite des Bodenflanschs (26, 30) des Gruppen- oder des Zwischenschaltgetriebegehäuses die offene Seite des Gangschaltgetriebegehäuses befestigbar ist und daß ein Festrad (G20) der Festräderwelle (S2) des Gangschaltgetriebemoduls (10) mit einem Festrad (G3D, G5F) der Festräderwelle (S3, S5) des Gruppenschaltgetriebemoduls (11, 12) kämmt.

14. Getriebe nach einem der Ansprüche 8 bis 13, dadurch gekennzeichnet, daß ein Festrad (G3D, G5F) der Festräderwelle (S3, S5) des Gruppenschaltgetriebemoduls (11, 12) als Eingangszahnrad dient und einerseits mit dem weiteren Festrad (G20) der Festräderwelle (S2) des Gangschaltgetriebemoduls (10) und andererseits mit einem Losrad (G4D, G6F) der Losräderwelle (S4, S6) des Gruppenschaltgetriebemoduls (11, 12) kämmt.

15. Getriebe nach einem der Ansprüche 8 bis 14, dadurch gekennzeichnet, daß die auf den Losräderwellen (S4, S6) zweier wahlweise verwendbarer Gruppen- bzw. Zwischenschaltgetriebemodule (11, 12) gelagerten Losräder (G4D, G6F), die mit dem auf der Festräderwelle (S3, S5) angeordneten Festrad (G3D, G5F) des Gruppenschaltgetriebemoduls (11, 12), das als Eingangszahnrad des Gruppen- bzw. Zwischenschaltgetriebemoduls (11, 12) dienen kann, kämmen, Zahnräder mit gleichem Durchmesser jedoch unterschiedlicher Zähnezahlen sind.

16. Getriebe nach einem der Ansprüche 8 bis 15, dadurch gekennzeichnet,
- daß eine Getriebeeinheit ein Kriechgangschaltgetriebemodul (11) enthält mit einem zwischen das Gangschaltgetriebegehäuse und das Gruppenschaltgetriebegehäuse einfügbaren, hutförmigen Kriechgangschaltgetriebegehäuse,
- daß in dem Kriechgangschaltgetriebegehäuse eine Kriechgangeingangswelle (SC) und eine Nebenwelle (S9) angeordnet sind, die mit ihrem jeweils ersten Ende im Bodenflansch (26) des Kriechgangschaltgetriebemoduls (11) gelagert sind und mit ihrem jeweils zweiten Ende sich frei in die dem Bodenflansch (26) gegenüberliegende Öffnung des Kriechgangschaltgetriebegehäuses erstrecken,
- daß ein auf der Kriechgangeingangswelle (SC) angeordnetes Festrad (GC2) mit einem relativ großen Festrad (G91) der Nebenwelle (S9) kämmt,
- daß ein relativ kleines Festrad (G92) der Nebenwelle (S9) mit einem konzentrisch zur Kriechgangeingangswelle (SC) gelagerten Losrad (G3C2) kämmt und
- daß durch eine Schalteinrichtung (CC2) wahlweise die Kriechgangeingangswelle (SC) oder das Losrad (G3C2) drehfest mit der Festräderwelle (S3) eines nachgeordneten Gruppenschaltgetriebemoduls (12) in Eingriff bringbar ist. (Fig. 3)

17. Getriebe nach Anspruch 16, dadurch gekennzeichnet, daß das zweite Ende der Kriechgangeingangswelle (SC) drehbar in einer Ausnehmung der Festräderwelle (S3) des nachgeordneten Gruppenschaltgetriebemoduls (12) gelagert ist.

18. Getriebe nach Anspruch 16 oder 17, dadurch gekennzeichnet, daß auf einem drehfest mit der Festräderwelle (S3) eines nachgeordneten Gruppenschaltgetriebemoduls (12) verbundenen Wellenabschnitt die Schalteinrichtung (CC2) angeordnet ist, die die Festräderwelle (S3) wahlweise mit einem drehfest auf der Kriechgangeingangswelle (SC) angeordneten Kupplungskörper (CC1) oder dem Losrad (G3C2) kuppelt.

19. Getriebe nach einem der Ansprüche 16 bis 18, dadurch gekennzeichnet,
- daß im Bereich des freien zweiten Endes der Kriechgangeingangswelle (SC) ein zu dieser konzentrischer hohler Wellenabschnitt drehbar gelagert ist, der über eine Keilverzahnung drehfest mit der Festräderwelle (S3) des nachgeordneten Gruppenschaltgetriebemoduls (12) verbindbar ist,
- daß der hohle Wellenabschnitt in seinem mittleren Bereich ein drehfestes Zahnrad (G3C1), im Bereich eines Endes eine Verzahnung, die mit der axial verschiebbaren Schalteinrichtung (CC2) in Eingriff steht, und im Bereich des anderen Endes das drehbare Losrad (G3C2), das mit einem Festrad (G92) der Nebenwelle (S9) kämmt, trägt,
- daß mit der Schalteinrichtung (CC2) wenigstens ein Schaltstift verbunden ist, der sich durch eine Ausnehmung in dem drehfesten Zahnrad (G3C1) erstreckt und durch axiales Verschieben der Schalteinrichtung (CC2) wahlweise in eine Ausnehmung des drehbaren Losrades (G3C2) einführbar ist.

20. Getriebe nach Anspruch 19, dadurch gekennzeichnet, daß die Schalteinrichtung (CC2) mit einer Schaltverzahnung des Kupplungskörpers (CC1) der Kriechgangeingangswelle (SC) in Eingriff bringbar ist.

21. Getriebe nach einem der Ansprüche 16 bis 20, dadurch gekennzeichnet, daß die Kriechgangeingangswelle (SC) ein weiteres Festrad (GC1) trägt, das als Eingangszahnrad dient und mit dem weiteren Festrad (G20) der Festräderwelle (S2) des Gangschaltgetriebemoduls (10) kämmt.

22. Getriebe nach Anspruch 21, dadurch gekennzeichnet, daß das Eingangszahnrad (GC1) der Kriechgangeingangswelle (SC) sowie das drehfeste Zahnrad (G3C1) des hohlen Wellenabschnitts jeweils mit einem durch eine Schalteinrichtung (CF, CE) schaltbaren Losrad (G6F, G6E) einer Losräderwelle (S6) kämmen. (Fig. 4)

23. Getriebe nach Anspruch 22, dadurch gekennzeichnet, daß die Losräderwelle (S6) des Kriechgangschaltgetriebemoduls (11) und die Losräderwelle (S4) eines dem Kriechgangschaltgetriebemodul (11) nachgeordneten Gruppenschaltgetriebemoduls (12) miteinander drehfest verbunden sind.

24. Getriebe nach Anspruch 22 oder 23, dadurch gekennzeichnet, daß zum einen das Losrad (G6F), das auf der Losräderwelle (S6) des Kriechgangschaltgetriebemoduls (11) gelagert ist und mit dem Eingangszahnrad (GC1) des Kriechgangschaltgetriebemoduls (11) kämmt, und zum anderen das Losrad (G4D), das auf der Losräderwelle (S4) eines dem Kriechgangschaltgetriebemodul (11) nachgeordneten Gruppenschaltgetriebemoduls (12) gelagert ist und mit dem als Eingangszahnrad verwendbaren auf der Festräderwelle (S3) des Gruppenschaltgetriebemoduls (12) gelagerten Festrad (G3D) kämmt, Zahnräder mit gleichen Durchmessern, jedoch unterschiedlicher Zähnezahlen sind.

25. Getriebe nach einem der Ansprüche 8 bis 24, dadurch gekennzeichnet, daß eine Getriebeeinheit ein Vorderradantriebsgetriebemodul (16) enthält mit einem seitlich am Gruppenschaltgetriebegehäuse an dessen Mantelbereich befestigbaren Vorderradantriebsgetriebegehäuse, wobei eine Eingangsverzahnung (GF3 oder GF1) des Vorderradantriebsgetriebemoduls (16) mit einem auf der Losräderwelle (S4) des Gruppenschaltgetriebemoduls (12) festgelegten Zahnrad (G40) verbunden ist.

26. Getriebe nach Anspruch 25, dadurch gekennzeichnet, daß in dem Vorderradantriebsgetriebegehäuse eine Abtriebswelle (SF2) gelagert ist, die mittels einer Kupplung (CF) mit einem auf der Abtriebswelle (SF2) gelagerten Losrad (GF3) kuppelbar ist, und daß auf einer im Vorderradantriebsgetriebegehäuse gelagerten Nebenwelle (SF1) ein Zahnrad mit zwei Verzahnungen (GF1, GF2) drehbar gelagert ist, dessen erste Verzahnung (GF1) die Eingangsverzahnung des Vorderradantriebsgetriebemoduls (16) ist und dessen zweite Verzahnung (GF2) mit dem Losrad (GF3) kämmt.

27. Getriebe nach einem der Ansprüche 8 bis 26, dadurch gekennzeichnet, daß auf der Losräderwelle (S4) des Gruppenschaltgetriebemoduls (12) ein Zahnrad (G40) festgelegt ist, das als Antriebszahnrad für ein Vorderradantriebsgetriebemodul (16) geeignet ist, und daß das Zahnrad (G40) gleichzeitig zum Eingriff einer Parksperre dient.

28. Getriebe nach einem der Ansprüche 8 bis 27, dadurch gekennzeichnet, daß eine Getriebeeinheit ein Vorgelege (13) enthält mit einem innerhalb des Gruppenschaltgetriebegehäuses befestigbaren Vorgelegegehäuse, in dem zwei Achsen (S7, S8) zur drehbaren Aufnahme von Zahnrädern angeordnet sind, und daß eine Eingangsverzahnung (G71) des Vorgeleges (13) mit dem Festrad (G3A) der Festräderwelle (S3) des Gruppenschaltgetriebemoduls (12) sowie eine Ausgangsverzahnung (G82) des Vorgeleges (13) mit dem Losrad (G4A) der Losräderwelle (S4) des Gruppenschaltgetriebemoduls (12) kämmen. (Fig. 2)

29. Getriebe nach Anspruch 28, dadurch gekennzeichnet, daß die beiden Wellen (S7, S8) des Vorgeleges (13) je ein Zahnrad mit zwei Verzahnungen (G71, G72; G81, G82) aufnehmen, daß je eine Verzahnung (G72, G81) der Zahnräder miteinander kämmen und daß die übrigen beiden Verzahnungen die Eingangsverzahnung (G71) und die Ausgangsverzahnung (G82) bilden.

30. Getriebe nach einem der Ansprüche 8 bis 29, dadurch gekennzeichnet, daß an Stelle des Gangschaltgetriebemoduls (10) ein Lastschaltgetriebemodul, insbesondere mit Reversiereinrichtung, verwendbar ist, dessen Gehäuse an dem Getriebegehäuse der nachfolgenden Getriebeeinheit befestigbar ist und dessen Ausgangswelle mit der Eingangswelle der nachfolgenden Getriebeeinheit drehfest verbindbar ist.

## Claims

1. A transmission for motor vehicles, especially for agricultural or commercial vehicles, including a plurality of transmission units, which can be fitted together selectively in modular manner and which form a multi-gear transmission, characterized in that
- the transmission comprises at least two transmission units whose transmission housings are each of substantially hat shape and include on one housing side a base flange (20, 26, 30, 42) and a housing opening on the side opposite thereto, the opening being closable to the outside by the base flange (26, 30, 42) of an adjacent transmission housing,
- at least one transmission shaft (S1, S2, S3, S4, S5, S6, S7, S8, S9) is associated with each of the two transmission units and is mounted at one end in the base flange (20, 26, 30, 42) of the corresponding transmission housing and extends freely into the housing opening of the transmission housing at the other end, such that
- the transmission housing with the associated transmission shaft (S1, S2, S3, S4, S5, S6, S7, S8, S9) as well possibly other components forms a transmission unit which can be pre-assembled in itself, and
- the end of the transmission shaft (S1, S2, S3, S4, S5, S6, S7, S8, S9) extending freely into the housing opening of the transmission housing is supported on the base flange (26, 30, 42) or a suitable receptacle (29, 36) of an adjacent transmission unit.

2. A transmission according to claim 1, characterized in that a bearing point is formed between the freely extending end of the transmission shah (S1, S5, S6) and the adjacent end of a transmission shaft (S3, S5, S4) of an adjacent transmission unit.

3. A transmission according to claim 1 or 2, characterized in that the first end of a transmission shaft (S3, S4, S5, SC) mounted in a base flange (26, 30) of an adjacent transmission unit has a recess open to the housing rear side the adjacent transmission unit, which recess receives and supports the freely extending end of a transmission shaft (S1, S5, S6) of the first transmission unit.

4. A transmission according to any of claims 1 to 3, characterized in that
- one of the transmission units includes a change-speed gearbox module (10) with a change speed gearbox housing of hat shape, which receives an input shaft (S1) with at least two loose wheels (G11, G12) engageable by selector units (C1, C2), as well as a fixed wheel shaft (S2) with at least two fixed wheels (G21, G22) in mesh with the loose wheels (G11, G12),
- the input shaft (S1) and the fixed wheel shaft (S2) are mounted at their first ends in the base flange (20) of the change speed gearbox housing and extend at their respective second ends freely into the opening of the change speed gearbox housing opposite to the base flange (20),
- the fixed wheel shaft (S2) carries a further fixed wheel (G20) in the region of its second, free end, which wheel meshes with an input gearwheel (G3D, G5F, GC1) of an adjacent transmission unit, and
- after assembling the transmission the second ends of the input shaft (S1) and of the fixed wheel shaft (S2) are supported in the region of the base flange (26, 30) or by a suitable receptacle (29, 36) of the adjacent transmission unit.

5. A transmission according to claim 4, characterized in that the free end of the input shaft (S1) of the change speed gearbox module (10) in mounted rotatably in a recess of a shaft (S3, S5) of the adjacent transmission unit and in that the shaft (S3, S5) of the adjacent transmission unit can be connected fast against rotation with selector teeth, through which the input shaft (S1) of the change speed gearbox module (10) can be coupled fast against rotation to the shaft (S3, S5) of the adjacent transmission unit by means of a selector unit (C3) arranged on the input shaft (S1).

6. A transmission according to claim 4 or 5, characterized in that the input shaft (S1) of the change speed gearbox module carries a third loose wheel (G1R) engageable by a selector unit (CR) and the fixed wheel shaft (S2) carries a third fixed wheel (G2R), and in that the third loose wheel (G1R) and the third fixed wheel (G2R) are in engagement with one another through a reversing wheel (GIR) mounted rotatably in the change speed gearbox housing.

7. A transmission according to any of claims 4 to 6, characterized in that the change speed gearbox module (10) is arranged at the start of the gear train.

8. A transmission according to any of claims 1 to 7, characterized in that
- another of the transmission units includes a range selector gearbox module (11, 12) with a hat-shaped range selector gearbox housing which receives a fixed wheel shaft (S3) and a loose wheel shaft (S4), which carry associated pairs of fixed wheels (G3D, G3C, G3B, G3A) and loose wheels (G4D, G4C, G4B, G4A), wherein the loose wheels (G4D, G4C, G4B, G4A) can be coupled to the loose wheel shaft (S4) fast against rotation by selector units (CD, CC, CB, CA), and
- the fixed wheel shaft (S3) and the loose wheel shaft (S4) are mounted in the base flange (30) of the range selector gearbox housing at their respective first ends.

9. A transmission according to claim 8, characterized in that the range selector gearbox housing can be fixed at its open end, opposite to the base flange (30), to a differential housing (14), and in that the second ends of the fixed wheel shaft (S3) and the loose wheel shaft (S4) are mounted in the differential housing (14) and the loose wheel shaft (S4) carries fast against rotation the bevel gear (GB) of a differential gear at its second end.

10. A transmission according to claim 8 or 9, characterized in that
- a gearbox unit can be introduced between the change speed gearbox housing and the range selector gearbox housing and comprises an intermediate gearbox module (11) with a hat-shaped intermediate gearbox housing,
- a fixed wheel shaft (S5) and a loose wheel shaft (S6) are arranged in the intermediate gearbox housing and carry associated pairs of fixed wheels (G5F, G5E) and loose wheels (G6F, G6E), wherein the loose wheels (G6F, G6E) can be coupled fast against rotation to the loose wheel shaft (S6) by selector units (CF, CE),
- the fixed wheel shaft (S5) and the loose wheel shaft (S6) are mounted at their respective first ends in the base flange (26) of the intermediate gearbox housing and extend freely at their respective second ends into the opening of the intermediate gearbox housing opposite to the base flange (26),
- the fixed wheel shaft (S5) serves as the input shaft of the intermediate gearbox module (11) and is connected fast against rotation to the fixed wheel shaft (S3) of a following range selector gearbox module (12) and
- the loose wheel shaft (S6) is connected fast against rotation to the loose wheel shaft (S4) of the following range selector gearbox module (12) (Figure 2)

11. A transmission according to claim 10, characterized in that the fixed wheel shaft (S5) and the loose wheel shaft (S6) of the intermediate gearbox module (11) are coupled by coupling teeth to the fixed wheel shaft (S3) and the loose wheel shaft (S4) respectively of the following range selector gearbox module (12).

12. A transmission according to any of claims 8 to 11, characterized in that the loose wheel shafts (S4, S6) of the range selector gearbox module (12) and the intermediate gearbox module (11) are so formed that they can accept different loose wheel sets without alteration of the positions of the selector devices (CD, CC, CB, CA, CF, CE) and in that a fixed wheel shaft (S3, S5) with corresponding fixed wheel teeth is associated with each loose wheel set.

13. A transmission according to any of claims 8 to 12, characterized in that the open side of the change speed gearbox housing can be fixed to the outer side of the base flange (26, 30) of the range or intermediate gearbox housing and in that a fixed wheel (G20) of the fixed wheel shaft (S2) of the fixed wheel shaft (S2) of the change speed gearbox module (10) meshes with a fixed wheel (G3D, G5F) of the fixed wheel shaft (S3, S5) of the range selector gearbox module (11, 12).

14. A transmission according to any of claims 8 to 13, characterized in that a fixed wheel (G3D, G5F) of the fixed wheel shaft (S3, S5) of the range selector gearbox module (11, 12) serves as the input gearwheel and meshes on the one hand with the further fixed wheel (G20) of the fixed wheel shaft (S2) of the change speed gearbox module (10) and on the other hand with a loose wheel (G4D, G6F) of the loose wheel shaft (S4, S6) of the range selector gearbox module (11, 12).

15. A transmission according to any of claims 8 to 14, characterized in that the loose wheels (G4D, G6F) mounted on the loose wheel shafts (S4, S6) of two selectively usable range or intermediate gearbox modules (11, 12) which mesh with the fixed wheel (G3D, G5F) of the range selector gearbox module (11, 12), which can serve as the input gearwheel of the range or intermediate gearbox module (11, 12), are gearwheels with the same diameter by different numbers of gear teeth.

16. A transmission according to any of claims 8 to 15, characterized in that
- one transmission unit comprises a creep gearbox module (11) with a hat-shaped creep gearbox housing which can be interposed between the change speed gearbox housing and the range selector gearbox housing,
- a creep gearbox input shaft (SC) and a countershaft (S9) are arranged in the creep gearbox housing and are mounted at their respective first ends in the base flange (26) of the creep gearbox module (11) and extend at their respective second ends freely into the opening of the creep gearbox housing opposite the base flange (26),
- a fixed wheel (GC2) arranged on the creep gear input shaft (SC) meshes with a relatively large fixed wheel (G91) of the countershaft,
- a relatively small fixed wheel (G92) of the countershaft (S9) meshes with a loose wheel (G3C2) mounted concentrically with the creep gear input shaft (SC), and
- the creep gear input shaft (SC) or the loose wheel (G3C2) can be brought selectively into engagement, fast against rotation with the fixed wheel shaft (S3) of a following range selector gearbox module (12). (Figure 3)

17. A transmission according to claim 16, characterized in that the second end of the creep gear input shaft (SC) is mounted rotatably in a recess in the fixed wheel shaft (S3) of the following range selector gearbox module (12).

18. A transmission according to claim 16 or 17, characterized in that the selector device (CC2) is arranged on a shaft section fast against rotation with the fixed wheel shaft (S3) of a following range selector gearbox module (12) and couples the fixed wheel shaft (S3) selectively to a selector body (CC1) arranged fast against rotation on the creep gear input shaft (SC) or to the loose wheel (G3C2).

19. A transmission according to any of claims 16 to 18, characterized in that
- a hollow shaft section is rotatably mounted concentrically in the region of the free second end of the creep gear input shaft (SC) and can be coupled by spline teeth fast against rotation to the fixed wheel shaft (S3) of the following range selector gearbox module (12),
- the hollow shaft section carries a rotationally fast gearwheel (G3C1) in its middle region, teeth in the region of one end which are in engagement with the axially displaceable selector device (CC2) and the rotatable loose wheel (G3C2) in the region of the other end, meshing with a fixed wheel (G92) of the countershaft (S9),
- at least one selector rod is connected to the selector device (CC2) and extends through a recess in the rotationally fast gearwheel (G3C1) and can be introduced by axially shifting of the selector device (CC2) selectively into a recess in the rotatable loose wheel (G3C2).

20. A transmission according to claim 19, characterized in that the selector device (CC2) can be brought by selector teeth of the coupling body (CC1) into engagement with the creep gear input shaft (SC).

21. A transmission according to any of claims 16 to 20, characterized in that the creep gear input shaft (SC) carries a further fixed wheel (GC1) which serves as the input gearwheel and meshes with the further fixed wheel (G20) of the fixed wheel shaft (S2) of the change speed gearbox module (10).

22. A transmission according to claim 21, characterized in that the input gearwheel (GC1) of the creep gear input shaft (SC) and the rotationally fast gearwheel (G3C1) of the hollow shaft section each mesh with a loose wheel (G6F, G6E) of a loose wheel shaft (S6) selectable by a selector device (CF, CE). (Figure 4)

23. A transmission according to claim 22, characterized in that the loose wheel shaft (S6) of the creep gearbox module (11) and the loose wheel shaft (S4) of a range selector gearbox module (12) following the creep gearbox module (11) are connected together fast against rotation.

24. A transmission according to claim 22 or 23, characterized in that on the one hand the loose wheel (G6F) which is mounted on the loose wheel shaft (S6) of the creep gearbox module (11) and meshes with the input gearwheel (GC1) of the creep gearbox module (11) and on the other hand the loose wheel (G4D) which is mounted on the loose wheel shaft (S4) of a range selector gearbox module (12) following the creep gearbox module (11) and meshes with the fixed wheel (G3D) usable as the input gearwheel on the fixed wheel shaft (S3) of the range selector gearbox module (12) are gearwheels with the same diameters but different numbers of teeth.

25. A transmission according to any of claims 8 to 24, characterized in that one transmission unit comprises a front wheel drive transmission module (16) with a front wheel drive transmission housing which can be fixed on the side of the range selector gearbox housing, on its casing region, wherein input teeth (GF3 or GF1) of the front wheel transmission module (16) are coupled to a gearwheel (G40) fixed on the loose wheel shaft (S4) of the range selector gearbox module (12).

26. A transmission according to claim 25, characterized in that a drive shaft (SF2) is mounted in the front wheel drive transmission housing and can be coupled by means of a clutch (CF) to a loose wheel (GF3) mounted on the drive shaft (SF2), and in that a gearwheel with two sets of teeth (GF1, GF2) is mounted rotatably on a countershaft (SF1) mounted in the front wheel drive transmission housing, of which the first set of teeth (GF1) is the input set of teeth of the front wheel drive transmission module (16) while the second set of teeth (GF2) meshes with the loose wheel (GF3).

27. A transmission according to any of claims 8 to 26, characterized in that a gearwheel (G40) is fixed on the loose wheel shaft (S4) of the range selector gearbox module (12) and is adapted to be the drive gearwheel for a front wheel drive transmission module (16), and in that the gearwheel (G40) serves at the same time for engagement of a parking lock.

28. A transmission according to any of claims 8 to 27, characterized in that one transmission unit includes a back gear (13) with a back gear housing which can be fixed inside the range selector gearbox housing and in which two shafts (S7, S8) are arranged for rotatable reception of gearwheels, and in that input teeth (G71) of the back gear (13) mesh with the fixed wheel (G3A) of the fixed wheel shaft (S3) of the range selector gearbox module (12) and output teeth (G82) of the back gear (13) mesh with the loose wheel (G4A) of the loose wheel shaft (S4) of the range selector gearbox module (12). (Figure 2)

29. A transmission according to claim 28, characterized in that the two shafts (S7, S8) of the back gear (13) receive a gearwheel with two sets of teeth (G71, G72; G81, G82), in that each one set of teeth (G72, G81) of the gearwheels mesh with one another and in that the other two sets of teeth form the input teeth (G71) and the output teeth (G82).

30. A transmission according to any of claims 8 to 29, characterized in that a transmission module which can be shifted under load can be used in place of the change speed gearbox module (10), especially with a reversing device, its housing being fixable to the transmission housing of the following transmission unit while its output shaft can be coupled to the input shaft of the following transmission unit.

## Revendications

1. Transmission pour véhicules automobiles, notamment pour véhicules agricoles ou utilitaires, qui comporte plusieurs unités de transmission, qui peuvent être réunies au choix de façon modulaire et forme une transmission à plusieurs vitesses,
- que la transmission comporte au moins deux unités de transmission, dont les carters sont réalisés chacun essentiellement en forme de chapeau et contiennent, sur un côté du carter, un flasque de fond (20,26,30,42) et sur le côté opposé, une ouverture de carter, qui peut être fermée en direction de l'extérieur par le flasque de fond (26,30,40) d'un carter voisin de la transmission,
- qu'à chacune des deux unités de la transmission est associé au moins un arbre (S1,S2,S3,S4,S5,S6,S7,S8,S9), qui est tourillonné, à une extrémité, dans le flasque de fond (20,26,30,42) du carter associé de la transmission et, à l'autre extrémité, s'étend librement dans l'ouverture du carter de la transmission,
- que le carter de la transmission forme, avec l'arbre associé (S1,S2,S3,S4,S5,S6,S7,S8,S9) de la transmission ainsi que, éventuellement, avec d'autres composants, une unité de transmission pouvant être en soi préassemblée, et
- que l'extrémité, qui s'étend librement dans l'ouverture du carter de la transmission, de l'arbre (S1,S2,S3, S4,S5,S6,S9) de la transmission prend appui sur le flasque de fond (26,30,40) ou sur un logement approprié (29,36) d'une unité de transmission voisine.

2. Transmission selon la revendication 1, caractérisée en ce qu'un palier est formé entre l'extrémité, qui s'étend librement, de l'arbre (S1,S5,S6) de la transmission et l'extrémité voisine d'un arbre (S3,S5, S4) d'une unité de transmission voisine.

3. Transmission selon la revendication 1 ou 2, caractérisée en ce que la première extrémité, qui est tourillonnée dans un flasque de fond (26,30) d'un arbre (S3, S4,S5,SC) d'une unité de transmission voisine possède un évidement, qui s'ouvre en direction du côté arrière du carter de l'unité de transmission voisine, et qui loge et soutient l'extrémité, qui s'étend librement, d'un arbre (S1,S5,S6) de la première unité de la transmission.

4. Transmission selon l'une des revendications 1 à 3, caractérisée en ce
- que l'une des unités de la transmission contient un module de transmission à changement de vitesses (10), comporte un carter de transmission à changement de vitesses réalisé en forme de chapeau de la transmission à changement de vitesses, qui loge un arbre d'entrée (S1) comportant au moins deux pignons fous (G11,G12), qui peuvent être enclenchés par des unités de commutation (C1,C2), ainsi qu'un arbre (S2) comportant au moins deux pignons fixes (G21,G22) qui engrènent avec les pignons fous (G11,G12),
- que l'arbre d'entrée (S1) et l'arbre (S2) portant les pignons fixes sont montés, par une première de leurs extrémités, dans le flasque de fond (20) du carter de la transmission à changement de vitesses et s'étendent librement, par leur seconde extrémité libre respective, dans l'ouverture, située à l'opposé du flasque de fond (20), du carter de la transmission à changement de vitesses,
- que l'arbre (S2) portant les pignons fixes porte, dans la zone de sa seconde extrémité libre, un autre pignon fixe (G20), qui engrène avec un pignon d'entrée (G3D, G5F, GC1) d'une unité de transmission voisine, et
- qu'après le montage de la transmission, les secondes extrémités de l'arbre d'entrée (S1) ainsi que de l'arbre (S2) portant les pignons fixes prennent appui dans la zone du flasque de fond (26,30) ou d'un logement approprié (29,36) de l'unité de transmission voisine.

5. Transmission selon la revendication 4, caractérisée en ce que l'extrémité libre de l'arbre d'entrée (S1) du module de transmission à changement de vitesses (10) est monté rotatif dans un évidement d'un arbre (S3,S5) de l'unité de transmission voisine, et que l'arbre (S3,S5) de l'unité de transmission voisine peut être relié avec blocage en rotation à une denture de commutation, au moyen de laquelle l'arbre d'entrée (S1) du module de transmission à changement de vitesses (10) peut être relié avec blocage en rotation à l'arbre (S3,S5) de l'unité de transmission voisine, par l'intermédiaire d'une unité de commutation (C3), qui est disposée sur l'arbre d'entrée (S1) du module de transmission à changement de vitesses (10).

6. Transmission selon la revendication 4 ou 5, caractérisée en ce que l'arbre d'entrée (S1) du module de transmission à changement de vitesses (10) porte un troisième pignon fou (G1R), qui peut être enclenché au moyen d'une unité de commutation (C1), et l'arbre (S2) portant les pignons fixes porte un troisième pignon fixe (G2R), et que le troisième pignon fou (G1R) et le troisième pignon fixe (G2R) engrène réciproquement par l'intermédiaire d'un pignon inverseur (GIR) monté rotatif dans le carter de la transmission à changement de vitesses.

7. Transmission selon l'une des revendications 4 à 6, caractérisée en ce que le module de transmission à changement de vitesses (10) est disposé au début de la chaîne de la transmission.

8. Transmission selon l'une des revendications 1 à 7, caractérisée en ce
- que l'autre des unités de transmission contient un module de transmission formant groupe-relais (11,12) comportant un carter de la transmission formant groupe-relais en forme de chapeau, qui loge un arbre (S3) portant des pignons fixes et un arbre (S4) portant des pignons fous, ces arbres portant des couples réciproquement associés formés de pignons fixes (G3D,G3C,G3D,G3A) et de pignons fous (G4D,G4c,G4b,G4A), les pignons fous (G4D,G4B,G4C, G4A) pouvant être reliés avec blocage en rotation à l'arbre (S4) portant les pignons fous, au moyen d'unités de commutation (CD,CC,CB,CA), et
- que l'arbre (S3) portant les pignons fixes et l'arbre (S4) portant les pignons fous sont tourillonnés, par une première extrémité respective, dans le flasque de fond (30) du carter de la transmission formant groupe-relais.

9. Transmission selon la revendication 8, caractérisée en ce que le carter de la transmission formant groupe-relais peut être fixé, par son extrémité ouverte, située à l'opposé du flasque de fond (30), sur un carter de différentiel (14), que les secondes extrémités de l'arbre (S3) portant les pignons fixes et de l'arbre (S4) portant les pignons fous sont tourillonnés dans le carter de différentiel (14) et que l'arbre (S4) portant les pignons fous porte avec blocage en rotation, au niveau de sa seconde extrémité, le pignon conique (GB) d'un différentiel.

10. Transmission selon la revendication 8 ou 9, caractérisée en ce
- qu'entre le carter de la transmission à changement de vitesses et le carter de la transmission formant groupe-relais d'une unité de transmission peut être insérée une unité de transmission, qui contient un module de transmission intermédiaire (11) comportant un carter en forme de chapeau,
- que dans le carter de transmission intermédiaire sont disposés un arbre (S5) portant les pignons fixes et un arbre (S6) portant des pignons fous, ces arbres portant des couples respectivement associés de pignons fixes (G5F, G5E) et de pignons fous (G6F, G6E), les pignons fous (G6F, G6E) pouvant être reliés avec blocage en rotation à l'arbre (S6) portant les pignons fous, au moyen d'unités de commutation (CF,CE),
- que l'arbre (S5) portant les pignons fixes et l'arbre (S6) portant les pignons fous sont tourillonnés par une première extrémité respective, dans le flasque de fond (26) du carter de la transmission intermédiaire et s'étendent librement, par leur autre extrémité respective, dans l'ouverture du carter de la transmission intermédiaire, qui est situé à l'opposé du flasque de fond (26),
- que l'arbre (S5) portant les pignons fixes est utilisé comme arbre d'entrée du module de transmission intermédiaire (11) et est relié avec blocage en rotation à l'arbre (S3) portant les pignons fixes d'un module de transmission formant groupe-relais (12) situé en aval, et
- que l'arbre (S6) portant les pignons fous est relié avec blocage en rotation à l'arbre (S4) portant les pignons fous du module de transmission formant groupe-relais (12) disposé en aval. (Figure 2).

11. Transmission selon la revendication 10, caractérisée en ce que l'arbre (S5) portant les pignons fixes et l'arbre (S6) portant les pignons fous du module de transmission intermédiaire (11) sont reliés par l'intermédiaire de dentures d'accouplement à l'arbre (S3) portant les pignons fixes ou à l'arbre (S4) portant les pignons fous du module de transmission formant groupe-relais (12) disposé en aval.

12. Transmission selon l'une des revendications 8 à 11, caractérisée en ce que l'arbre (S4,S6) portant les pignons fous du module de transmission formant groupe-relais (12) et du module de transmission intermédiaire (11) sont agencés de telle sorte que, pour une position inchangée du dispositif de commutation (CD,CC,CB,CA,CF,CE), il peut reevoir différents ensembles de pignons fous et qu'à chaque ensemble de pignons fous est associé un arbre (S3,S5) portant les pignons fous et qui comporte des dentures correspondantes de pignons fous.

13. Transmission selon l'une des revendications 8 à 11, caractérisée en ce que le côté ouvert du carter de la transmission à changement de vitesses peut être fixé au côté extérieur du flasque de fond (26,30) du carter de la transmission formant groupe-relais ou de la transmission intermédiaire, et qu'un pignon fixe (G20) de l'arbre (S2) portant les pignons fixes du module de transmission à changement de vitesses (10) engrène avec un pignon fixe (G3D,G5F) de l'arbre (S3,S5) portant les pignons fixes du module de transmission formant groupe-relais (11,12).

14. Transmission selon l'une des revendications 8 à 13, caractérisée en ce que le pignon fixe (G3D,G5F) de l'arbre (S3,S5) portant les pignons fixes du module de transimssion formant groupe-relais (11,12) est utilisé en tant que pignon d'entrée et engrène d'une part avec l'autre pignon fixe (G20) de l'arbre (S2) portant les pignons fixes du module de transmission à changement de vitesses (10) et d'autre part avec un pignon fou (G4D,G6F) de l'arbre (S4, S6) portant les pignons fous du module de transmission formant groupe-relais (11,12).

15. Transmission selon l'une des revendications 8 à 14, caractérisée en ce que les pignons fous (G4D,G6F), qui sont montés sur les arbres (S4,S6) portant les pignons fous de deux modules de transmission formant groupe-relais ou de transmission intermédiaire (11,12), que l'on peut utiliser au choix, et qui engrènent avec le pignon fixe (G3D,G5F) du module de transmission formant groupe-relais (11,12), qui est monté sur l'arbre (S3,S5) portant les pignons fixes et qui peut être utilisé en tant que pignon d'entrée du module de transmission formant groupe-relais ou du module de transmission intermédiaire (11,12) sont des pignons possédant le même diamètre, mais avec des nombres de dents différents.

16. Transmission selon l'une des revendications 8 à 15, caractérisée en ce
- qu'une unité de transmission contient un module de transmission à vitesse lente (11) comportant un carter en forme de chapeau, qui peut être inséré entre le carter de la transmission à changement de vitesses et le carter de la transmission formant groupe-relais,
- que dans le carter de la transmission à vitesse lente sont disposés un arbre d'entrée (SC) pour une vitesse lente et un arbre secondaire (S9), qui sont tourillonnés, par une première extrémité respective, dans le flasque de fond (26) du module (11) de la transmission à vitesse lente et s'étendent librement, par leur seconde extrémité respective, dans l'ouverture du carter de la transmission à vitesse lente, située à l'opposé du flasque de fond (26),
- qu'un pignon fixe (GC2), monté sur l'arbre d'entrée (SC) pour la vitesse lente, engrène avec un pignon fixe (G91) ayant une taille relativement grande de l'arbre secondaire (S9),
- qu'un pignon fixe relativement petit (G29) de l'arbre secondaire (S3) engrène avec un pignon fou (G3C2) monté concentriquement à l'arbre d'entrée (S1) pour la vitesse lente, et
- que grâce à un dispositif de commutation (CC2), au choix l'arbre d'entrée (SC) pour la vitesse lente ou le pignon fou (G3C2) peut être amené à engrener, avec blocage en rotation, avec l'arbre (S3) portant les pignons fixes d'un module de transmission formant groupe-relais (12) disposé en aval. (Figure 3).

17. Transmission selon la revendication 16, caractérisée en ce que la seconde extrémité de l'arbre d'entrée (S1) pour la vitesse lente est montée de manière à pouvoir tourner dans un évidement de l'arbre (S3) portant les pignons fixes du module de transmission formant groupe-relais disposé en aval.

18. Transmission selon la revendication 16 ou 17, caractérisée en ce que sur un bout d'arbre, qui est relié avec blocage en rotation à l'arbre (S3) portant les pignons fixes d'un module de transmission formant groupe-relais (12) disposé en aval, est disposé le dispositif de commutation (CC2), qui accouple l'arbre (S3) portant les pignons fixes au choix à un corps d'accouplement (CC1), qui est monté avec blocage en rotation sur l'arbre d'entrée (SC) pour la vitesse lente, ou au pignon fixe (G3C2).

19. Transmission selon l'une des revendications 16 à 18, caractérisée en ce
- que dans la zone de la seconde extrémité libre de l'arbre d'entrée (SC) pour la vitesse lente est monté, avec possibilité de rotation, un bout d'arbre creux concentrique, qui peut être relié avec blocage en rotation, par l'intermédiaire d'une denture conique avec l'arbre (S3) portant les pignons fixes du module de transmission formant groupe-relais (12) disposé en aval,
- que le bout d'arbre creux comporte, dans sa partie médiane, un pignon bloqué en rotation (G3C), et au niveau d'une extrémité une denture, qui engrène avec le dispositif de commutation (CC2) pouvant être déplacé axialement, et, au niveau de l'autre extrémité, le pignon fou rotatif (G3C2), qui engrène avec un pignon fixe (92) de l'arbre secondaire (S9),
- qu'au dispositif de commutation (CC2) est relié au moins une tige de commutation, qui s'étend à travers un évidement ménagé en rotation dans le pignon (G3C1) mais peut être introduite au choix dans un évidement du pignon rotatif (G3C2), sous l'effet d'un déplacement axial du dispositif de commutation (CC2).

20. Transmission selon la revendication 19, caractérisée en ce que le dispositif de conmutation (CC2) peut engrener avec une denture de commutation du corps d'accouplement (CC1) de l'arbre d'entrée (SC) pour la vitesse lente.

21. Transmission selon l'une des revendications 16 à 20, caractérisée en ce que l'arbre d'entrée (SC) pour la vitesse lente porte un autre pignon fixe (GC1), qui sert de pignon d'entrée et qui engrène avec l'autre pignon fixe (G20) de l'arbre (S2) portant les pignons fixes du module de transmission à changement de vitesses (10).

22. Transmission selon la revendication 1, caractérisée en ce que le pignon d'entrée (GC1) de l'arbre d'entrée (SC) pour la vitesse lente ainsi que le pignon bloqué en rotation (G3C1) du bout d'arbre creux engrènent respectivement avec un pignon fou (G6F,G6E), qui peut être enclenché au moyen d'un dispositif de commutation (CF,CE), d'un arbre (S6) portant les pignons fous. (Figure 4).

23. Transmission selon la revendication 22, caractérisée en ce que l'arbre (S6) portant les pignons fous du module de transmission (11) pour la vitesse lente et l'arbre (S4) portant les pignons fous d'un module de transmission formant groupe-relais (12), disposé en aval du module de transmission (11) pour la vitesse lente sont reliés entre eux avec blocage en rotation.

24. Transmission selon la revendication 22 ou 23, caractérisée en ce que d'une part le pignon fou (G6F), qui est monté sur l'arbre (S6) portant les pignons fous du module de transmission (11) pour la vitesse lente et engrène avec le pignon d'entrée (GC) du module de transmission (11) pour la vitesse lente, et d'autre part le pignon fixe (G4D), qui est monté sur l'arbre (S4) portant les pignons fous d'un module de transmission formant groupe-relais (12) disposé en aval du module de transmission (11) pour la vitesse lente et qui engrène avec le pignon fixe (G3D) qui est utilisable en tant que pignon d'entrée et est monté sur l'arbre (S3) portant les pignons fixes du module de transmission formant groupe-relais (12), sont des pignons possédant des diamètres identiques, mais des nombres de dents différents.

25. Transmission selon l'une des revendications 8 à 24, caractérisée en ce qu'une unité de transmission contient un module de transmission (16) d'entraînement de l'essieu avant, comportant un carter qui peut être fixé latéralement au carter de la transmission formant groupe-relais, à la partie enveloppe de ce carter, une denture d'entrée (GF3 ou GF1) du module de transmission (16) pour l'entraînement de l'essieu avant étant reliée à un pignon (G40) qui est fixé sur l'arbre (S4) portant les pignons fous du module de transmission formant groupe-relais (12).

26. Transmission selon la revendication 25, caractérisée en ce que dans le carter de transmission pour l'entraînement de l'essieu avant est tourillonné un arbre mené (SF2), qui peut être accouplé, au moyen d'un accouplement (CF) à un pignon fou (GF3) monté sur l'arbre mené (SF2), et que sur un arbre secondaire (SF1), qui est monté dans le carter de transmission pour l'entraînement de l'essieu avant est monté rotatif un pignon comportant deux dentures (GF1,GF2), dont la première (GF1) est la denture d'entrée du module de transmission (16) pour l'entraînement des roues avant et dont la seconde (GF2) engrène avec le pignon fou (GF3).

27. Transmission selon l'une des revendications 8 à 26, caractérisée en ce que sur l'arbre (S4) portant les pignons fous du module de transmission formant groupe-relais (12) est fixé un pignon (G40), qui convient en tant que pignon d'entraînement pour un module de transmission (16) utilisé pour l'entraînement des roues avant, et que le pignon (G40) est destiné simultanément à engrener avec un système de blocage pour le parcage.

28. Transmission selon l'une des revendications 8 à 27, caractérisée en ce qu'une unité de transmission contient une boîte de renvoi (13), comportant un carter qui peut être fixé à l'intérieur du carter de la transmission formant groupe-relais et dans lequel sont disposés deux axes (S7,S8) servant à recevoir, avec possibilité de rotation, des pignons, et qu'une denture d'entrée (G71) de la boîte de renvoi (13) engrène avec le pignon fixe (G3A) de l'arbre (S3) portant les pignons fixes du module de transmission formant groupe-relais (12), et une denture extérieure (G82) de la boîte de renvoi (13) engrène avec le pignon fou (G4A) de l'arbre (S4) portant les pignons fous du module de transmission formant groupe-relais (12). (Figure 2).

29. Transmission selon la revendication 28, caractérisée en ce que les deux arbres (S7,S8) de la boîte de renvoi (13) reçoivent chacun un pignon comportant deux dentures (G71,G72; G81,G82), que des premières dentures respectives (G72,G81) des pignons engrènent entre elles et que les deux autres dentures constituent la denture d'entrée (G71) et la denture de sortie (G82).

30. Transmission selon l'une des revendications 8 à 29, caractérisée par le fait qu'à la place du module de transmission à changement de vitesses (10) on peut utiliser un module de transmission à vitesses commandées en charge, notamment avec un dispositif d'inversion, et dont le carter peut être fixé au carter de l'unité de transmission située en aval et dont l'arbre de sortie peut être relié avec blocage en rotation à l'arbre d'entrée de l'unité de transmission disposée en aval.
